# EUROPEAN PATENT SPECIFICATION

(11) **EP 2 759 999 B1**
(45) Date of publication and mention of the grant of the patent: **27.07.2016**
(21) Application number: 12834549.3
(22) Date of filing: 21.09.2012
(51) Int. Cl.: G08G 1/16, B60R 1/00, B60R 21/00, H04N 7/18, G06K 9/00

(54) **APPARATUS FOR MONITORING SURROUNDINGS OF VEHICLE**
VORRICHTUNG ZUR ÜBERWACHUNG VON FAHRZEUGUMGEBUNGEN
APPAREIL DE SURVEILLANCE DE L'ENVIRONNEMENT D'UN VÉHICULE

(30) Priority: 21.09.2011 JP 2011206620; 12.10.2011 JP 2011224528; 31.10.2011 JP 2011238600
(43) Date of publication of application: 30.07.2014
(73) Proprietor: Honda Motor Co., Ltd., Minato-ku Tokyo 107-8556 (JP)
(72) Inventor: TAKATSUDO Izumi, Wako-shi Saitama 351-0193 (JP); NAGAOKA Nobuharu, Wako-shi Saitama 351-0193 (JP); AIMURA Makoto, Wako-shi Saitama 351-0193 (JP); MATSUDA Kodai, Wako-shi Saitama 351-0193 (JP)
(74) Representative: Weickmann & Weickmann PartmbB
(86) International application number: PCT/JP2012/074229
(87) International publication number: WO 2013/042767

(56) References cited:
- WO-A1-2011/048454
- JP-A- 2001 114 048
- JP-A- 2007 069 806
- JP-A- 2007 323 578
- JP-A- 2008 026 985
- JP-A- 2010 044 561
- JP-A- 2010 247 621
- JP-A- 2010 247 621
- JP-A- 2011 087 006
- JP-A- 2011 091 549

## Description

### Technical Field

The present invention relates to a vehicle periphery monitoring apparatus (apparatus for monitoring surroundings of vehicle) for detecting a monitored target in the periphery of a vehicle and for displaying the detected object in a simple format.

### Background Art

There has heretofore been known a vehicle periphery monitoring apparatus for displaying an image captured of an area in front of a vehicle by an infrared camera. The image is displayed on a display in front of the driver's seat, and in the image, an area is highlighted representing a pedestrian detected from the image (see FIG. 5 of Japanese Laid-Open Patent Publication No. 2009-067214).

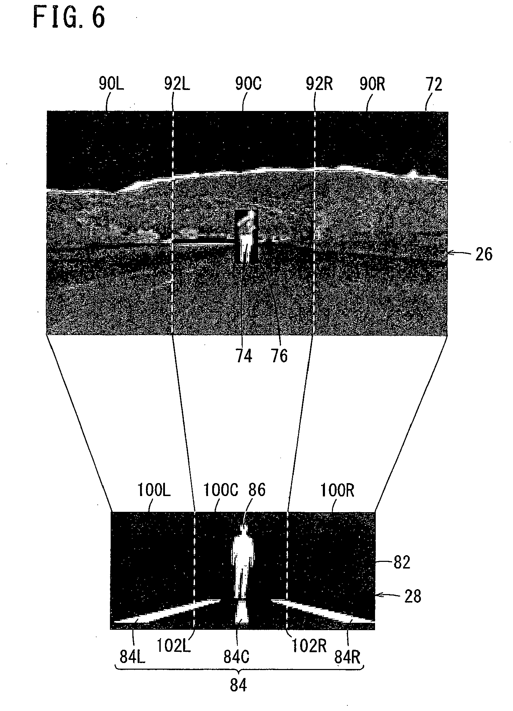

Another known apparatus displays an icon indicating the presence of a pedestrian on a head-up display (HUD) in addition to displaying a highlighted image area representing a pedestrian in an image displayed on a display. According to Japanese Laid-Open Patent Publication No. 2004-364112, if a pedestrian is determined to be present in an image captured by an infrared camera, an icon of the pedestrian is displayed on an HUD (see FIG. 6 and paragraphs [0036] through [0038]).

One technology for detecting pedestrians is capable of dealing with both processing speed and judging accuracy, by simply selecting a pedestrian candidate from binarized information and judging if the candidate represents a pedestrian based on grayscale information (see Abstract of Japanese Laid-Open Patent Publication No. 2003-284057).

WO 2011/048454 A1 discloses a vehicle periphery monitoring apparatus in accordance with the preamble of claim 1. The apparatus controls the second display unit so as to display the warning information when it is estimated or detected that an object that has disappeared from the displayed image is present in the field of view of a driver.

JP 2010-247621 A shows a driver support system of an automobile capable of surely calling a driver's attention when there is an obstacle, etc. around the automobile by a simple constitution. The drive support system includes detection sensors for detecting the obstacles etc. around the automobile, and attention calling means for calling the driver's attention based on detection signals from the detection sensors.

### Summary of Invention

According to Japanese Laid-Open Patent Publication No. 2004-364112, as described above, an icon indicating the presence of a pedestrian is displayed on an HUD. However, much remains to be improved in relation to calling more appropriate attention from the user.

The present invention has been made in view of the above task. It is an object of the present invention to provide a vehicle periphery monitoring apparatus, which is capable of calling appropriate attention from the user.

According to the present invention, there is provided a vehicle periphery monitoring apparatus for detecting a monitored target in the periphery of a vehicle based on a captured image signal generated by an image capturing device mounted on the vehicle, comprising a first display unit that displays a captured image represented by the captured image signal, a second display unit that visualizes information concerning whether or not the monitored target exists in a plurality of sub-regions, which make up the captured image displayed on the first display unit, based on whether marks associated respectively with the sub-regions are displayed, and an attention degree evaluator that evaluates a degree of attention of the monitored target for the vehicle, if at least one instance of the monitored target is detected in the captured image, wherein the second display unit displays the marks in different display modes depending on the degree of attention evaluated by the attention degree evaluator.

According to the present invention, if at least one instance of the monitored target is detected in the captured image, the second display unit displays the marks in different display modes depending on the degree of attention of the monitored target for the vehicle. Accordingly, it is possible to visually indicate to the user different degrees of attention of monitored targets, thereby calling appropriate attention from the user.

The degree of attention may represent a misidentifying possibility that the driver or occupant of the vehicle may possibly misidentify the position of the monitored target by visually recognizing the mark that is displayed. If it is judged that the misidentifying possibility is high, then the second display unit may simultaneously or alternately display the marks corresponding to one of the sub-regions in which at least a portion of the monitored target exists and an adjacent one of the sub-regions. The existence of the monitored target is thus displayed in a highlighted manner, making it possible to call appropriate attention from the user.

The attention degree evaluator may judge that the misidentifying possibility is high if the monitored target exists on one of boundary lines between the sub-regions.

The attention degree evaluator may judge that the misidentifying possibility is high before or after the monitored target moves across one of boundary lines between the sub-regions.

The attention degree evaluator may judge that the degree of attention is high if the monitored target is highly likely to collide with the vehicle.

The degree of attention may represent a possibility of collision of the monitored target with the vehicle. In this case, the attention degree evaluator may evaluate the possibility of collision of each monitored target if the monitored targets are detected respectively in at least two of the sub-regions, and the second display unit may display the marks in different display modes depending on the possibility of collision. Consequently, the difference between the degrees of attention of the monitored targets can be indicated to the user for assisting in driving the vehicle.

The second display unit may display one of the marks depending on at least one monitored target whose possibility of collision is evaluated as being high, so as to be more visually highlighted than another one of the marks depending on another one of the monitored targets. Thus, the existence of a monitored target whose attention level is relatively high from among a plurality of monitored targets can be conveniently indicated to the driver.

The attention degree evaluator may judge whether or not it is easy for the driver of the vehicle to locate the monitored target based on at least the captured image signal, and evaluate the possibility of collision depending on the result of the judgment. Accordingly, the accuracy in evaluating the degree of risk is increased by also taking into account an evaluation considered from the viewpoint of the driver.

The attention degree evaluator may judge whether or not the monitored target recognizes the existence of the vehicle based on at least the captured image signal, and evaluate the possibility of collision depending on the result of the judgment. Thus, the accuracy in evaluating the degree of risk can be increased by also taking into account an evaluation considered from the viewpoint of the monitored target.

The attention degree evaluator may predict a route to be followed by the vehicle, and evaluate the possibility of collision depending on the predicted route. Accordingly, the accuracy in evaluating the degree of risk can be increased by also taking into account the predicted route to be followed by the vehicle.

The attention degree evaluator may predict a direction of travel of the monitored target, and evaluate the possibility of collision depending on the predicted direction of travel. Accordingly, the accuracy in evaluating the degree of risk can be increased by also taking into account the direction of travel of the monitored target.

The sub-regions may comprise a central region corresponding to a central range that includes a direction of travel of the vehicle, a left region corresponding to a left range that is positioned to the left of the central range, and a right region corresponding to a right range that is positioned to the right of the central range, in an image range captured in front of the vehicle by the image capturing device. Therefore, apart from monitored targets that exist on left and right sides of the direction of travel of the vehicle, it is possible to call attention from the driver concerning a monitored target that exists in the direction of travel of the vehicle and is likely to collide with the vehicle.

The vehicle periphery monitoring apparatus may further comprise a region selector that selects one of the sub-regions to which a target image area sought as an image area of the monitored target from the captured image belongs. The region selector may select the central region if the target image area is positioned on a boundary line between the central region and the left region, or is positioned on a boundary line between the central region and the right region.

Generally, when a monitored target exists in the central range including the direction of travel of the vehicle, the driver pays more attention to the monitored target than if the monitored target were to exist in the left and right ranges. According to the present invention, if a target image area exists over a range between the central region and the left or right region i.e., on one of the boundary lines of the central region, the monitored target is detected as belonging to the central range, rather than the left range or the right range. Therefore, the driver is made to pay as much attention to the detected monitored target as attention that would be directed to a monitored target included fully within the central range.

The vehicle periphery monitoring apparatus may further comprise a direction-of-turn detecting sensor that detects a direction of turn of the vehicle, and a boundary line setter that displaces the boundary line between the central region and the right region toward the right region if the direction-of-turn detecting sensor detects a left turn of the vehicle, and displaces the boundary line between the central region and the left region toward the left region if the direction-of-turn detecting sensor detects a right turn of the vehicle.

A horizontal distance between a monitored target that exists near an edge of a road and the vehicle tends to be greater when the vehicle is traveling on a curved road than when the vehicle is traveling on a straight road. Thus, while the vehicle is making a left turn, the boundary line setter displaces the boundary line between the central region and the right region toward the right region. Similarly, while the vehicle is making a right turn, the boundary line setter displaces the boundary line between the central region and the left region toward the left region. In this manner, an image area of the monitored target existing near the edge of the road is displayed on the second display unit as belonging to the central region, thereby drawing attention from the driver to the monitored target.

The vehicle periphery monitoring apparatus may further comprise a vehicle speed sensor that detects a vehicle speed of the vehicle, and a boundary line setter that displaces the boundary line between the central region and the right region toward the right region and displaces the boundary line between the central region and the left region toward the left region, if the vehicle speed detected by the vehicle speed sensor is high rather than low.

At times that the vehicle is traveling at high speed, the time required for the vehicle to approach a monitored target in front of the vehicle is shorter than if the vehicle were traveling at low speed, so that the driver needs to pay more attention to the monitored target. Accordingly, while the vehicle is traveling at high speed, the boundary line setter displaces the boundary line between the central region and the left region toward the left region, and displaces the boundary line between the central region and the right region toward the right region. Consequently, a target image area, which would be displayed as belonging to the left region or the right region on the second display unit while the vehicle is traveling at low speed, is displayed as belonging to the central region while the vehicle is traveling at high speed. Consequently, while the vehicle is traveling at high speed, early attention can be called from the driver concerning the monitored target that is approaching the vehicle.

### Brief Description of Drawings

FIG. 1 is a block diagram showing the arrangement of a vehicle periphery monitoring apparatus according to a first embodiment of the present invention;
FIG. 2 is a perspective view of a vehicle incorporating the vehicle periphery monitoring apparatus shown in FIG. 1;
FIG. 3 is a view showing a scene as viewed from the driver of the vehicle shown in FIG. 2;
FIG. 4 is a view showing by way of example a displayed screen on a general-purpose monitor;
FIG. 5 is a view showing by way of example a displayed screen on an MID (Multi-Information Display);
FIG. 6 is a view showing the relationship between displayed images on the general-purpose monitor and the MID;
FIG. 7 is a flowchart of a general operation sequence of the vehicle periphery monitoring apparatus shown in FIG. 1;
FIG. 8 is a view showing by way of example a positional relationship between the vehicle and a biological target, an example of a grayscale image displayed on the general-purpose monitor, and an example of an icon image displayed on the MID, at a time that the biological target is far from the vehicle;
FIG. 9 is a view showing by way of example a positional relationship between the vehicle and a biological target, an example of a grayscale image displayed on the general-purpose monitor, and an example of an icon image displayed on the MID, at a time that the biological target is close to the vehicle;
FIG. 10 is a view showing by way of example a positional relationship between the vehicle and a biological target, an example of a grayscale image displayed on the general-purpose monitor, and an example of an icon image displayed on the MID, at a time that the vehicle is traveling at low speed;
FIG. 11 is a view showing by way of example a positional relationship between the vehicle and a biological target, an example of a grayscale image displayed on the general-purpose monitor, and an example of an icon image displayed on the MID, at a time that the vehicle is traveling at high speed;
FIG. 12 is a view showing a relationship between displayed images on the general-purpose monitor and the MID;
FIGS. 13A and 13B are views, each of which shows by way of example a positional relationship between the vehicle and a biological target, an example of an image displayed on the general-purpose monitor, and an example of an icon image displayed on the MID;
FIG. 14 is a flowchart of a processing sequence for segmenting a captured image depending on a turn made by the vehicle;
FIGS. 15A through 15C are views illustrating advantages of a segmentation process, which is performed when the vehicle makes a turn;
FIG. 16 is a flowchart of a processing sequence for segmenting a captured image depending on the speed of the vehicle;
FIGS. 17A and 17B are views illustrating advantages of a segmentation process, which is performed depending on the speed of the vehicle;
FIG. 18 is a block diagram showing the arrangement of a vehicle periphery monitoring apparatus according to a second embodiment of the present invention;
FIG. 19A is a front elevational view of a general-purpose monitor;
FIG. 19B is a front elevational view of an MID;
FIG. 20 is a flowchart of a general operation sequence of the vehicle periphery monitoring apparatus shown in FIG. 18;
FIGS. 21A and 21B are views showing by way of example first images captured by an infrared camera;
FIG. 22 is a view showing a corresponding relationship between a first position in a first display region and a second position in a second display region;
FIG. 23 is a view showing by way of example images displayed respectively on the general-purpose monitor and the MID as representing information concerning the first image shown in FIG. 21A;
FIG. 24 is a detailed flowchart of step S37 shown in FIG. 20;
FIGS. 25A through 25C are views illustrating a process of evaluating a degree of risk from the direction along which a monitored target moves;
FIGS. 26A and 26B are views illustrating a process of evaluating a degree of risk from a predicted route to be followed by the vehicle; and
FIG. 27 is a view showing by way of example images displayed respectively on the general-purpose monitor and the MID, wherein the images represent information concerning the first image shown in FIG. 21B.

### Description of Embodiments

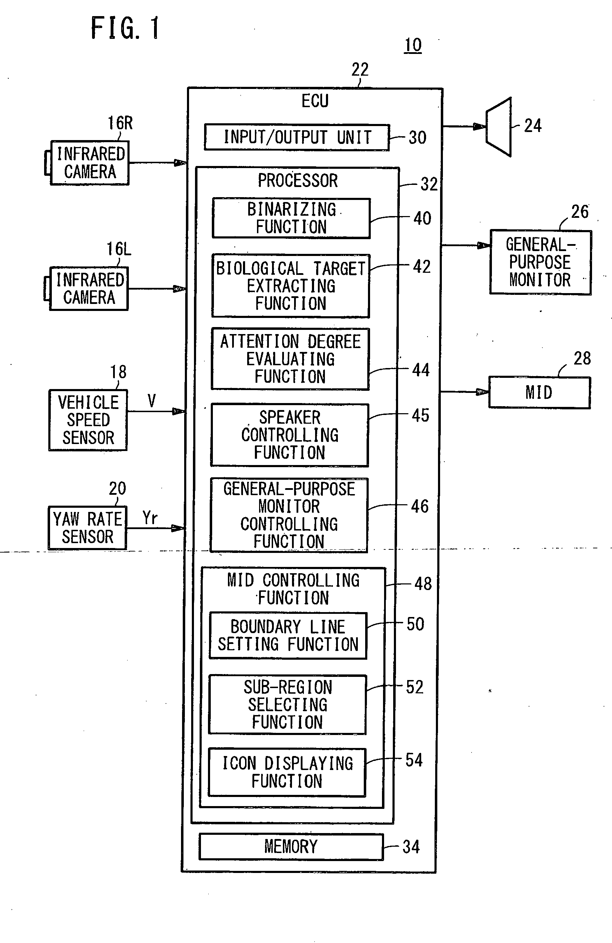

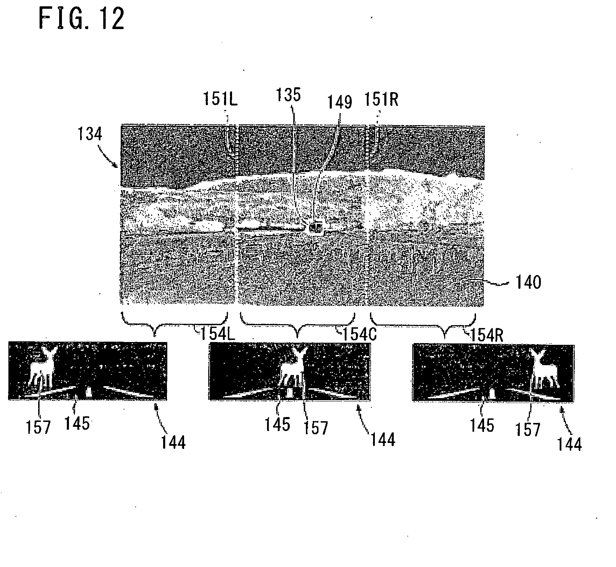

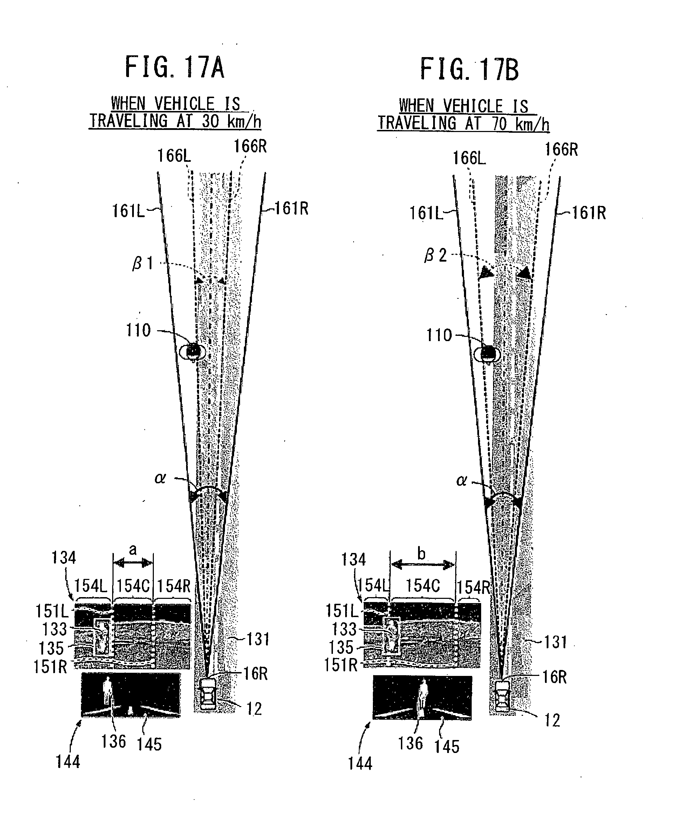

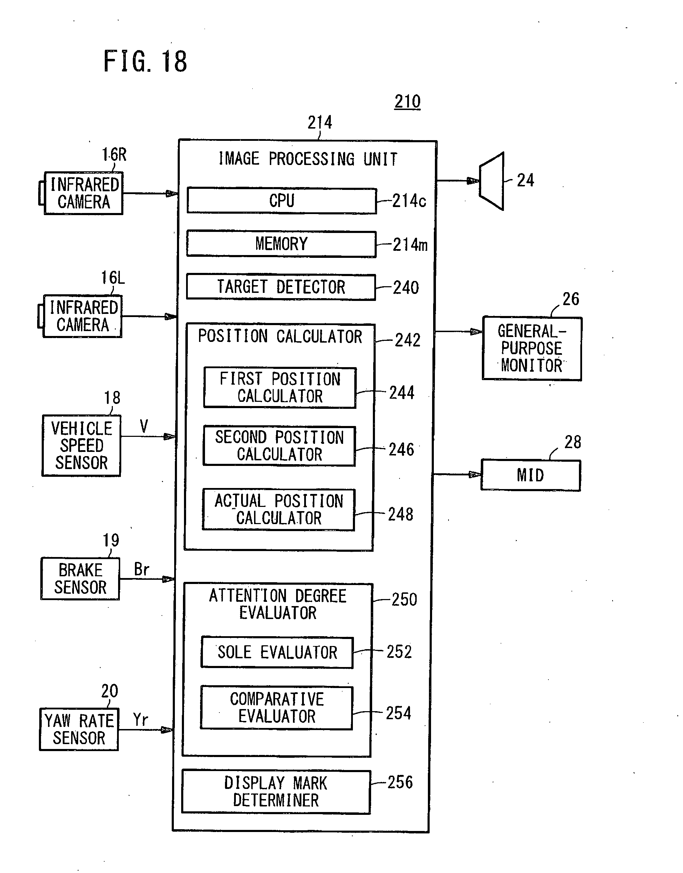

Vehicle periphery monitoring apparatus according to preferred embodiments of the present invention will be described below with reference to the accompanying drawings. More specifically, a vehicle periphery monitoring apparatus according to a first embodiment of the present invention will be described below with reference to FIGS. 1 through 11, a modification thereof will be described below with reference to FIGS. 12 through 17B, and a vehicle periphery monitoring apparatus according to a second embodiment of the present invention will be described below with reference to FIGS. 18 through 27.

### A. First Embodiment

### [1. Arrangement]

### (1-1. Overall Arrangement)

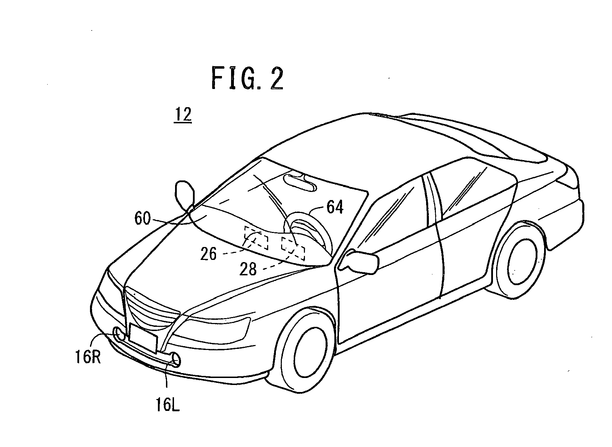

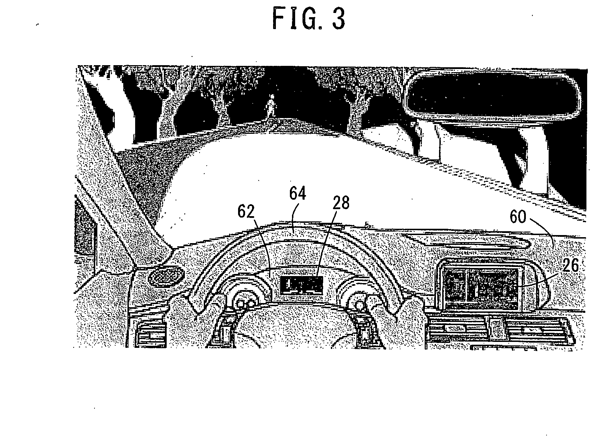

FIG. 1 is a block diagram showing an arrangement of a vehicle periphery monitoring apparatus 10 according to a first embodiment of the present invention. FIG. 2 is a perspective view of a vehicle 12 that incorporates the vehicle periphery monitoring apparatus 10 therein. FIG. 3 is a view showing a scene as viewed from the perspective of a driver or a user of the vehicle 12. FIG. 3 shows a situation in which the vehicle 12 is travelling on a road, in a country that requires all vehicles to keep to the right side of the road. The vehicle 12 is illustrated as a left-hand drive car. However, the same arrangement as the illustrated arrangement may be employed in right-hand drive cars.

As shown in FIGS. 1 and 2, the vehicle periphery monitoring apparatus 10 includes left and right infrared cameras 16L, 16R, a vehicle speed sensor 18, a yaw rate sensor 20 (direction-of-turn detecting sensor), an electronic control unit 22 (hereinafter referred to as an "ECU 22"), a speaker 24, a general-purpose monitor 26 (first display unit), and an MID 28 (Multi-Information Display, also referred to as a second display unit).

### (1-2. Infrared Cameras 16L, 16R)

The infrared cameras 16L, 16R are image capturing devices, which function as image capturing means for capturing images of the periphery of the vehicle 12. According to the present embodiment, the two infrared cameras 16L, 16R are combined to make up a stereo camera. The infrared cameras 16L, 16R both have a characteristic such that, as the temperature of a subject is higher, output signals from the infrared cameras 16L, 16R become higher in level (increase in brightness).

As shown in FIG. 2, the infrared cameras 16L, 16R are disposed on the front bumper of the vehicle 12, at respective positions symmetric with respect to the transverse center of the vehicle 12. The two infrared cameras 16L, 16R have respective optical axes, which lie parallel to each other and are fixed at equal heights from the surface of the road.

### (1-3. Vehicle Speed Sensor 18 and Yaw Rate Sensor 20)

The vehicle speed sensor 18 detects a vehicle speed V [km/h] of the vehicle 12, and supplies an output signal representing the detected vehicle speed V to the ECU 22. The yaw rate sensor 20 detects a yaw rate Yr [°/sec] of the vehicle 12, and supplies an output signal representing the detected yaw rate Yr to the ECU 22.

### (1-4. ECU 22)

The ECU 22 serves as a controller for controlling the vehicle periphery monitoring apparatus 10. As shown in FIG. 1, the ECU 22 includes an input/output unit 30, a processor 32, and a memory 34.

Signals from the infrared cameras 16L, 16R, the vehicle speed sensor 18, and the yaw rate sensor 20 are supplied through the input/output unit 30 to the ECU 22. Output signals from the ECU 22 are supplied through the input/output unit 30 to the speaker 24, the general-purpose monitor 26, and the MID 28. The input/output unit 30 has an A/D converter circuit, not shown, which converts analog signals supplied thereto into digital signals.

The processor 32 performs processing operations on the signals from the infrared cameras 16L, 16R, the vehicle speed sensor 18, and the yaw rate sensor 20. Based on the results of such processing operations, the processor 32 generates signals to be supplied to the speaker 24, the general-purpose monitor 26, and the MID 28.

As shown in FIG. 1, the processor 32 includes a binarizing function 40, a biological target extracting function 42, an attention degree evaluating function 44 (attention degree evaluator), a speaker controlling function 45, a general-purpose monitor controlling function 46, and an MID controlling function 48. These functions 40, 42, 44, 45, 46, 48 are performed upon execution of programs stored in the memory 34. Alternatively, the programs may be supplied from an external source through a non-illustrated wireless communication device (a cell phone, a smart phone, or the like).

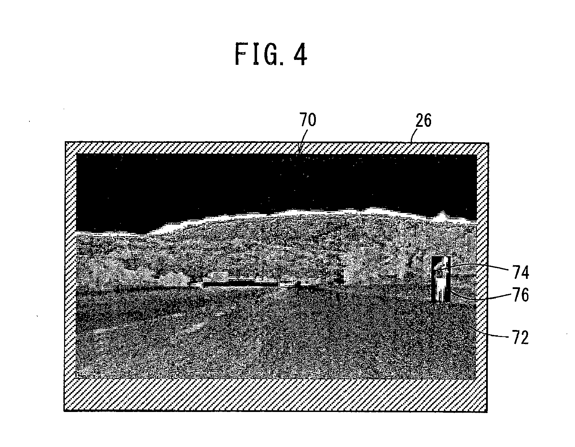

The binarizing function 40 generates a binarized image (not shown) by binarizing a grayscale image 72 (FIG. 4), which is acquired by one of the infrared cameras 16L, 16R (the left infrared camera 16L in the present embodiment). Using the grayscale image 72 and the binarized image, the biological target extracting function 42 extracts a biological target (hereinafter referred to as a "monitored target" or simply "a target") such as a human being or an animal that is present in the images. When at least one biological target is detected, the degree of attention evaluating function 44 evaluates a degree of attention of the detected biological target for the vehicle 12. The speaker controlling function 45 controls the speaker 24 to produce a warning sound or the like. The general-purpose monitor controlling function 46 controls the general-purpose monitor 26 to display the grayscale image 72.

The MID controlling function 48 controls the MID 28 in order to display a mark, e.g., an icon (hereinafter referred to as a "biological target icon") representing a biological target such as a human being or an animal on the MID 28. As shown in FIG. 1, the MID controlling function 48 includes a boundary line setting function 50 (boundary line setter), a sub-region selecting function 52 (region selector), and an icon displaying function 54. Details of such functions 50, 52, 54 will be described later.

The memory 34 includes a RAM (Random Access Memory) for storing temporary data, etc., used for various processing operations, and a ROM (Read Only Memory) for storing programs to be executed, tables, maps, etc.

### (1-5. Speaker 24)

The speaker 24 produces a warning sound or the like based on a command from the ECU 22. Although not shown in FIG. 3, the speaker 24 is mounted on a dashboard 60 (FIG. 3) of the vehicle. A speaker belonging to an audio system, not shown, or a navigation system, not shown, may alternatively be used as the speaker 24.

### (1-6. General-Purpose Monitor 26)

The general-purpose monitor 26 comprises a liquid crystal panel, an organic EL (ElectroLuminescence) panel, or an inorganic EL panel for displaying color or monochromatic images. As shown in FIGS. 2 and 3, the general-purpose monitor 26 is mounted in a given position on the dashboard 60, and more specifically, in a position on the right-hand side of the steering wheel 64.

FIG. 4 is a view showing by way of example a screen that is displayed on the general-purpose monitor 26. As shown in FIG. 4, the general-purpose monitor 26 includes a display region 70 (hereinafter referred to as a "first display region 70" or a "display region 70"), which displays a grayscale image 72 captured by the left infrared camera 16L.

The general-purpose monitor 26 can add a highlighting feature, which is generated by the general-purpose monitor controlling function 46, to the grayscale image 72. More specifically, as shown in FIG. 4, the general-purpose monitor 26 displays a highlighting frame 76 around an image area 74, which represents an extracted biological target such as a human being or an animal (target image area, hereinafter referred to as a "biological area 74"). Alternatively, the general-purpose monitor 26 may apply a color to the biological area 74, or may display the highlighting frame 76 in addition to applying a color to the biological area 74, or may highlight the biological area 74 in another way.

The general-purpose monitor 26 may display a grayscale image 72 captured by the right infrared camera 16R, rather than the grayscale image 72 captured by the left infrared camera 16L. The general-purpose monitor 26 may also display any of various other images, including navigation images such as road maps, service information, etc., or moving image content, etc., simultaneously in addition to, or selectively instead of the grayscale image 72 from the infrared-camera 16L or the infrared camera 16R. The general-purpose monitor 26 may select any of such images in response to pressing of a certain pushbutton switch, or according to a preset selecting condition, for example.

### (1-7. MID 28)

The MID 28 is a simple display device (icon display device) for visualizing and displaying ancillary information at the time that the vehicle 12 is driven. The MID 28 comprises a display module, which is simpler in structure and less costly than the general-purpose monitor 26, particularly the display panel thereof. For example, a display panel, which is lower in resolution than the general-purpose monitor 26, e.g., a display panel that operates in a non-interlace mode, may be used as the MID 28.

As shown in FIGS. 2 and 3, the MID 28 is mounted on the dashboard 60 upwardly of and proximate an instrument panel 62, or is mounted directly on the instrument panel 62. The MID 28 is disposed in a position that enables the driver of the vehicle 12 to see the MID 28 through an upper gap in the steering wheel 64. Therefore, the driver can observe the MID 28 while the driver's face is oriented toward the front of the vehicle 12.

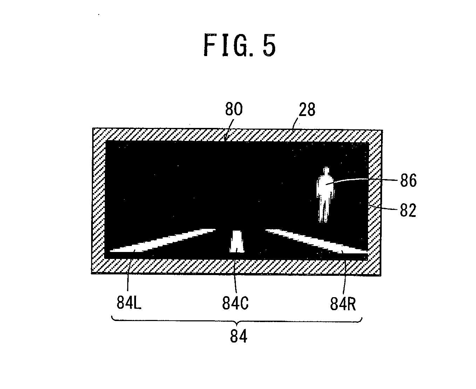

FIG. 5 is a view showing by way of example a displayed screen on the MID 28. As shown in FIG. 5, the MID 28 has a display region 80 (hereinafter referred to as a "second display region 80" or a "display region 80"), which displays an image 82 made up of various icons (hereinafter referred to as an "icon image 82") corresponding to the grayscale image 72.

For example, as shown in FIG. 5, the display region 80 displays in a lower portion thereof a road icon 84, which indicates a road along the direction of travel of the vehicle 12. The road icon 84 is made up of three lines, i.e., lines 84L, 84C, 84R, arranged successively from the left. A width of a gap between the lines 84L, 84R becomes progressively smaller toward the upper end in the display region 80, which is suggestive of a remote position. The displayed road icon 84 allows the driver to visualize the shape of a front road, typically a straight road, as the road is observed from the perspective of the driver's seat in the vehicle 12.

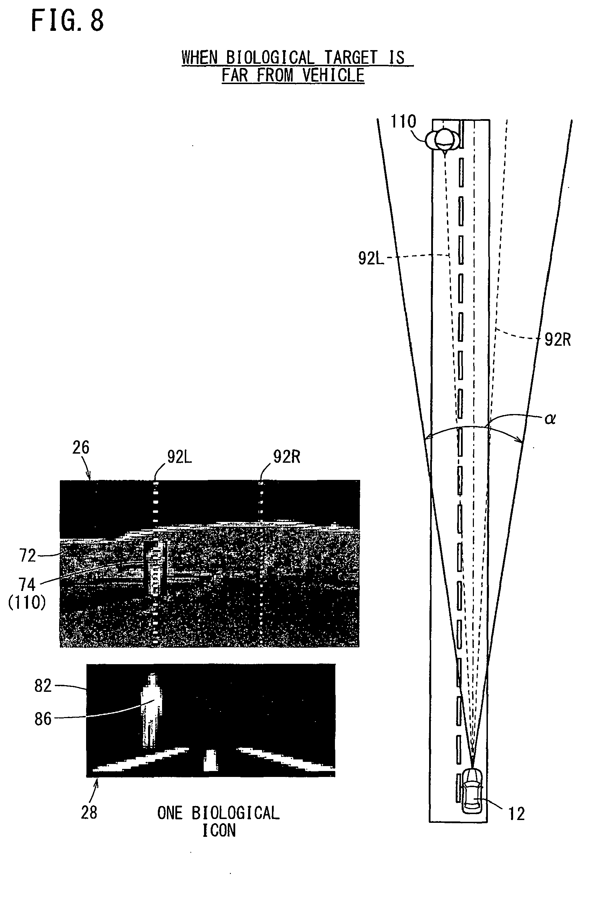

As shown in FIG. 5, the display region 80 can display in an upper portion thereof a human icon 86 representing a pedestrian who is present in the periphery of the vehicle 12. According to the present embodiment, the human icon 86 can be displayed at three locations, i.e., left, central, and right locations, in the display region 80 (see FIGS. 6 and 8).

Incidentally, instead of the human icon 86, icons representing other biological target (e.g., an animal icon representing an animal) may be displayed.

Alternatively, instead of the icons referred to above, i.e., the road icon 84, the human icon 86, and the animal icon, the MID 28 may selectively display information concerning the mileage of the vehicle 12, the present time, and the instrument panel 62. The MID 28 may.select any of such items of information (images) in response to pressing of a certain pushbutton switch, or according to a preset selecting condition, for example.

### [2. Relationship Between Images Displayed on the General-Purpose Monitor 26 and the MID 28]

FIG. 6 is a view showing a relationship between images displayed respectively on the general-purpose monitor 26 and the MID 28. As shown in FIG. 6, according to the present embodiment, the grayscale image 72 is segmented into three regions (hereinafter referred to as "first sub-regions 90L, 90C, 90R" and referred to collectively as "first sub-regions 90"), which are arrayed along the transverse direction of the vehicle 12. Boundary lines between the first sub-regions 90 (hereinafter referred to as "first boundary lines 92L, 92R" and referred to collectively as "first boundary lines 92") are imaginary lines, which are not included in the actual grayscale image 72, and are fixed and remain unchanged. In an actual processing operation, only positional information of the first boundary lines 92 may be used, whereas positional information of the first sub-regions 90 may not be used. The first boundary lines 92 may be shaped as an inverted chevron along road lanes, similar to the road icon 84 shown on the MID 28.

As shown in FIG. 6, the icon image 82 is segmented into three regions (hereinafter referred to as "second sub-regions 100L, 100C, 100R" and referred to collectively as "second sub-regions 100") arrayed along the transverse direction of the vehicle 12. Boundary lines between the second sub-regions 100 in the icon image 82 (hereinafter referred to as "second boundary lines 102L, 102R" and referred to collectively as "second boundary lines 102") are imaginary lines, which are not included in the actual icon image 82, and are fixed and remain unchanged. The second boundary lines 102L, 102R are associated-respectively with the first boundary lines 92L, 92R. As with the first boundary lines 92, the second boundary lines 102 may be shaped in an upwardly tapered manner along road lanes, similar to the road icon 84 shown on the MID 28.

According to the present embodiment, one of the first sub-regions 90 to which the biological area 74 belongs (hereinafter referred to as a "first biological area existing sub-region") in the grayscale image 72 is determined, and a biological icon, such as a human icon 86, an animal icon, or the like, is displayed on the MID 28 in one of the second sub-regions 100 of the icon image 82, which corresponds to the biological area existing sub-region (hereinafter referred to as a "second biological area existing sub-region"). Stated otherwise, depending on whether or not marks (a human icon 86 or the like) associated respectively with the first sub-regions 90 of the grayscale image 72 are displayed on the general-purpose monitor 26, information is visualized concerning whether or not monitored targets (biological targets) exist in the first sub-regions 90 of the grayscale image 72. In certain cases, as described in detail later, the number of biological icons to be displayed increases from 1 to 2.

### [3. Operations of Vehicle Periphery Monitoring Apparatus 10]

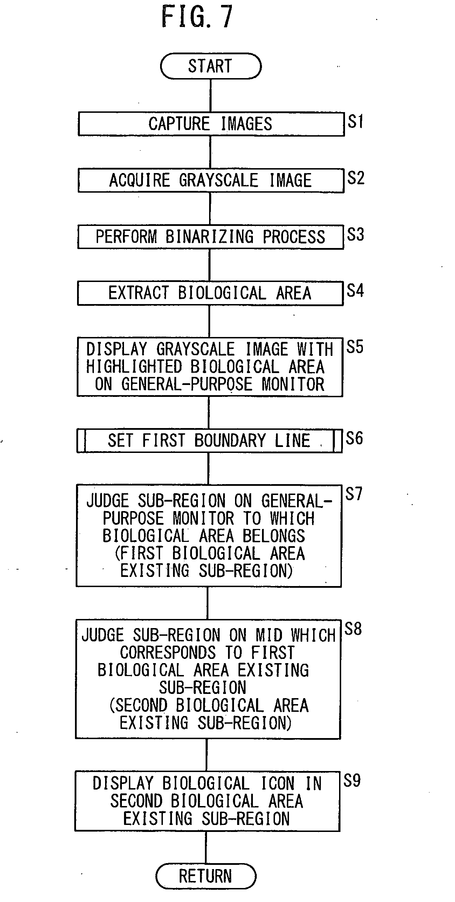

FIG. 7 is a flowchart of a general operation sequence of the vehicle periphery monitoring apparatus 10. In step S1 of FIG. 7, the infrared cameras 16L, 16R capture images of the periphery of the vehicle 12. In step S2, the ECU 22 converts analog signals from the infrared cameras 16L, 16R into digital signals, so as to acquire a grayscale image 72. In step S3, the ECU 22 performs a binarizing process. In the binarizing process, the ECU 22 binarizes the grayscale image 72 into a non-illustrated binarized image.

In step S4, the ECU 22 extracts a biological area 74 from the acquired binarized image and the grayscale image 72. Since a biological target is higher in temperature than the surrounding area, the area corresponding to the biological target, i.e., the biological area 74, appears high in brightness in the binarized image and in the grayscale image 72. Consequently, it is possible to extract a biological area 74 by searching the binarized image and the grayscale image 72 for an area of pixels having a brightness level that is greater than a predetermined threshold value.

Both the binarized image and the grayscale image 72 are used in order to identify the presence of a biological target easily from the binarized image, and then acquire detailed information concerning the biological target from the grayscale image 72. Such a processing sequence is disclosed in Japanese Laid-Open Patent Publication No. 2003-284057, for example. Alternatively, a biological area 74 may be extracted from either one of the binarized image and the grayscale image 72.

In step S5, the ECU 22 displays the grayscale image 72 with the highlighted biological area 74 on the general-purpose monitor 26. As described above, the ECU 22 highlights the biological area 74 with at least one of a color applied to the biological area 74 and the highlighting frame 76 added around the biological area 74 (FIG. 4).

In step S6, the ECU 22 establishes first boundary lines 92 (FIG. 6) in the grayscale image 72 or the binarized image, thereby segmenting the grayscale image 72 or the binarized image into first sub-regions 90. More specifically, the ECU 22 establishes first boundary lines 92 in order to segment the grayscale image 72 or the binarized image into three equal first sub-regions 90 arranged along the transverse direction of the vehicle 12.

In step S7, the ECU 22 determines one of the first sub-regions 90 to which the biological area 74 belongs (first biological area existing sub-region). If the biological area 74 exists on one of the first boundary lines 92, then the ECU 22 may determine two first sub-regions 90 on both sides of the first boundary line 92 as first sub-regions 90 to which the biological area 74 belongs.

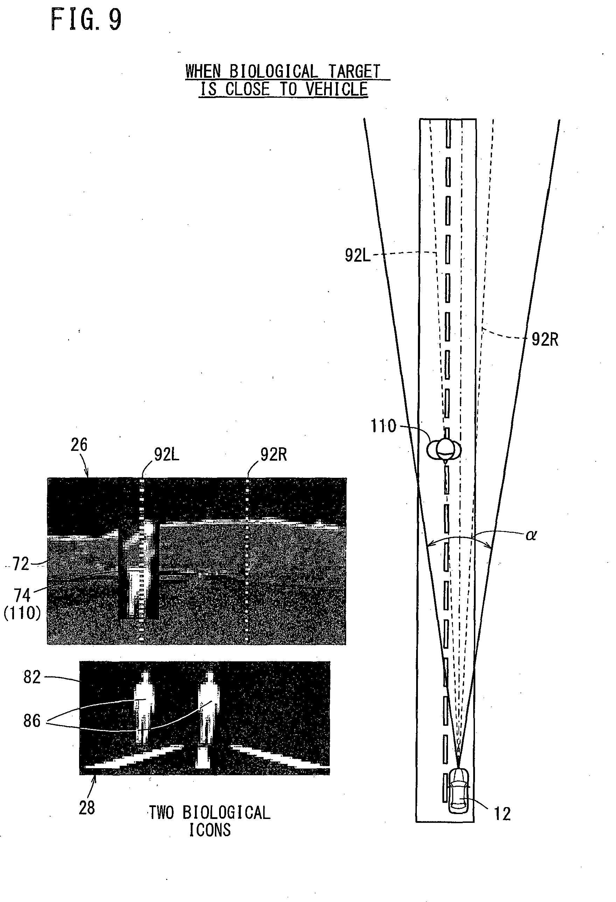

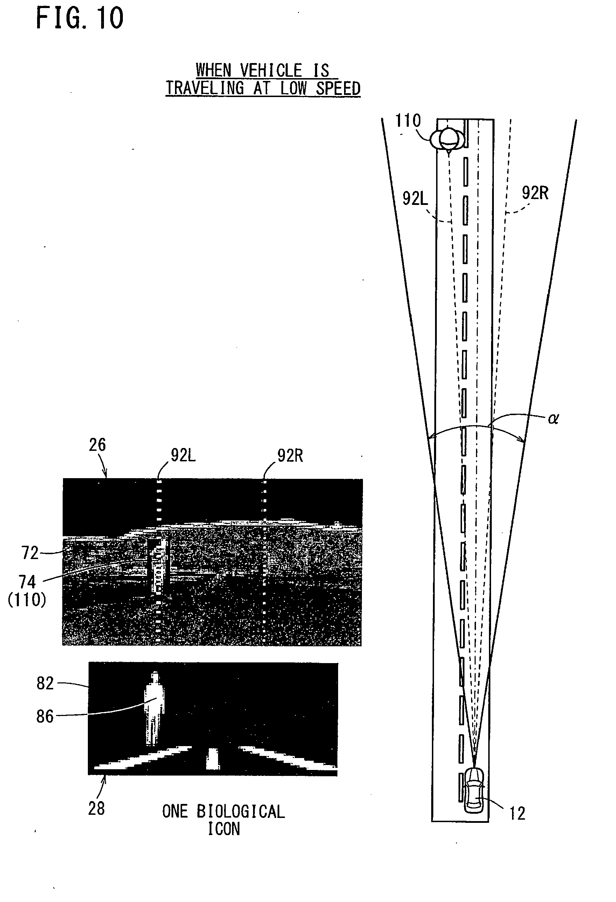

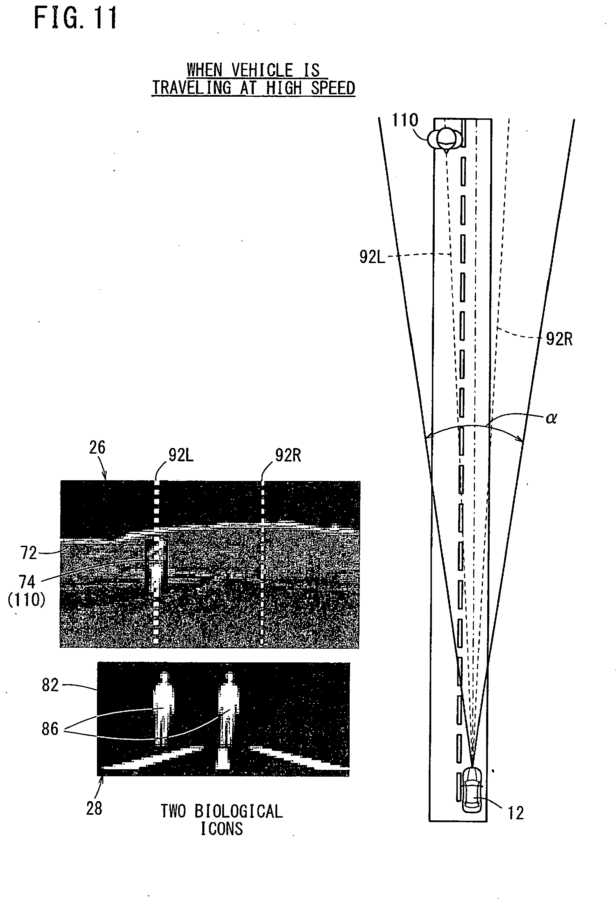

FIGS. 8 through 11 are views illustrating processes of identifying a first sub-region 90 to which the biological area 74 belongs (first biological area existing sub-region). More specifically, FIG. 8 shows the positional relationship between the vehicle 12 and a person 110, together with an example of the grayscale image 72 that is displayed on the general-purpose monitor 26 and an example of the icon image 82 that is displayed on the MID 28 when the person 110 is located far from the vehicle 12. FIG. 9 shows the positional relationship between the vehicle 12 and a person 110, together with an example of the grayscale image 72 that is displayed on the general-purpose monitor 26 and an example of the icon image 82 that is displayed on the MID 28 when the person 110 is located close to the vehicle 12. FIG. 10 shows the positional relationship between the vehicle 12 and a person 110, together with an example of the grayscale image 72 that is displayed on the general-purpose monitor 26 and an example of the icon image 82 that is displayed on the MID 28 when the vehicle speed V is low, i.e., when the vehicle 12 is traveling at low speed. FIG. 11 shows the positional relationship between the vehicle 12 and a person 110, together with an example of the grayscale image 72 that is displayed on the general-purpose monitor 26 and an example of the icon image 82 that is displayed on the MID 28 when the vehicle speed V is high, i.e., when the vehicle 12 is traveling at high speed. In FIGS. 8 through 11, α represents an angle of view of the infrared camera 16L.

As shown in FIG. 8, when the person 110 is far from the vehicle 12 and the person 110 (biological area 74) exists on one of the first boundary lines 92L, a biological icon (human icon 86) is displayed at one location on the MID 28. On the other hand, as shown in FIG. 9, when the person 110 is close to the vehicle 12 and the person 110 (biological area 74) exists on one of the first boundary lines 92L, a biological icon (human icon 86) is displayed at two locations on the MID 28, thereby indicating the person 110 in a highlighted manner to the driver.

As shown in FIG. 10, when the vehicle speed V is low and the person 110 (biological area 74) exists on one of the first boundary lines 92L, a biological icon (human icon 86) is displayed at one location on the MID 28. On the other hand, as shown in FIG. 11, when the vehicle speed V is high and the person 110 (biological area 74) exists on one of the first boundary lines 92L, a biological icon (human icon 86) is displayed at two locations on the MID 28, thereby indicating the person 110 in a highlighted manner to the driver. In the example illustrated in FIG. 11, the MID 28 displays a plurality of biological icons simultaneously. However, the MID 28 may also display the plurality of biological icons (human icons 86 or the like) in an alternating manner.

In step S8, the ECU 22 determines one of the second sub-regions 100 (a second biological area existing sub-region), which corresponds to the first biological area existing sub-region.

In step S9, the ECU 22 displays a biological target (a human icon 86 or the like) representing the biological target in the second biological area existing sub-region, which was determined in step S8. If there is a high likelihood of collision between the vehicle 12 and the biological target, then the speaker 24 may generate a warning sound.

### [4. Supplementary Remarks]

In the above embodiment, it is determined whether or not the biological area 74 exists on one of the first boundary lines 92 based on the position of the biological area 74 at the present time (in a present processing cycle). However, the judgment process is not limited to this technique. It is possible to regard a first sub-region 90 in which the person 110 (biological area 74) is highly likely to move as a first biological area existing sub-region, based on a motion vector of the person 110 (biological area 74) or the position thereof in the grayscale image 72, thereby calling more appropriate attention from the driver.

Upon use of the motion vector of the biological area 74, if the biological area 74 exists in the central first sub-region 90C and the motion vector is directed to the left, then the central first sub-region 90C and the left first sub-region 90L are selected. On the other hand, if the biological area 74 exists in the central first sub-region 90C and the motion vector is directed to the right, then the central first sub-region 90C and the right first sub-region 90R are selected.

Upon use of the position of the biological area 74 on the grayscale image 72, if the biological area 74 exists in a left side of the central first sub-region 90C, then the central first sub-region 90C and the left first sub-region 90L are selected. On the other hand, if the biological area 74 exists in a right side of the central first sub-region 90C, then the central first sub-region 90C and the right first sub-region 90R are selected.

The motion vector and the position on the grayscale image 72 may also be used to correct the position of the biological area 74, which is used in the process involving the first boundary lines 92, and the process carried out when there is a high possibility of collision between the vehicle 12 and the biological target. For example, if the motion vector of the biological area 74 is directed to the left, then using coordinates that are shifted to the left from the position (present position) where the biological area 74 exists, it may be judged whether or not the biological area 74 exists on one of the first boundary lines 92.

### [5. Advantages]

As described above, the degree of attention evaluating function 44 evaluates the degree of attention of a biological target for the vehicle 12 if at least one biological target (a monitored target such as a person 110 or an animal 160) is detected in the first sub-regions 90 of the grayscale image 72, and the MID 28 displays a mark in a different display mode depending on the degree of attention evaluated by the degree of attention evaluating function 44. Accordingly, it is possible to visually indicate to the user different degrees of attention of monitored targets, thereby calling appropriate attention from the user.

According to the first embodiment, the degree of attention represents a misidentifying possibility that the driver or occupant of the vehicle 12 may possibly misidentify the position of the monitored target such as the person 110 or the like by visually recognizing the displayed mark. If it is judged that the misidentifying possibility is high, then a plurality of biological icons (human icons 86) corresponding to one of the first sub-regions 90 where at least a portion of the monitored target exists and an adjacent one of the first sub-regions 90 are displayed simultaneously on the MID 28.

If the possibility of misidentification is high, this implies that (1) the biological area 74 exists on one of the first boundary lines 92, (2) the biological area 74 lies across one of the first boundary lines 92, or (3) the person 110 is highly likely to collide with the vehicle 12 (e.g., the person 110 is close to the vehicle 12 or the vehicle speed V is high).

### B. Modification of First Embodiment

A modification of the operation sequence of the vehicle periphery monitoring apparatus 10 will be described below. Such a modification differs from the first embodiment in relation to the behavior of the boundary line setting function 50 (step S6 of FIG. 7). Details of this modification will be described below with reference to FIGS. 12 through 17B. According to the modification, it is assumed that the vehicle 12 travels on a road, in a country that requires all vehicles to keep to the left side of the road.

### [1. Segmenting Operation of First Embodiment]

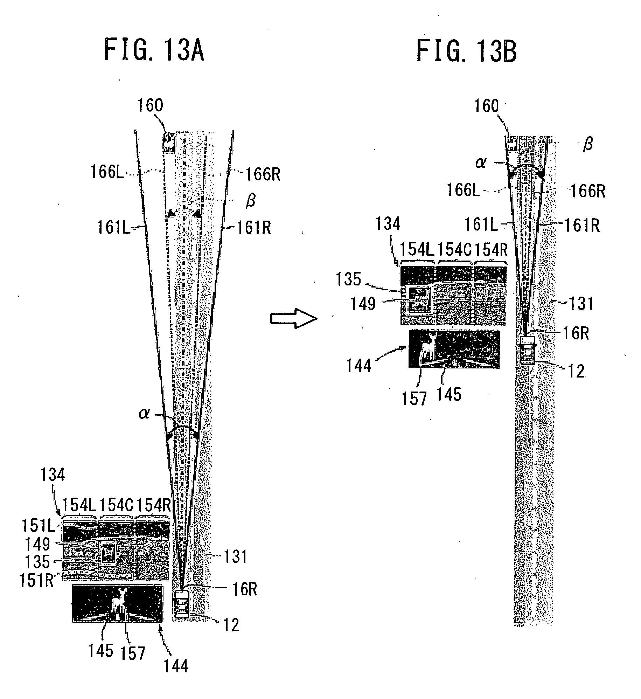

In step S6 of FIG. 7, the ECU 22 segments a captured image 134 as a grayscale image into three sub-regions, i.e., a central region corresponding to a central range including the direction of travel of the vehicle 12, a left region corresponding to a left range to the left of the central range, and a right region corresponding to a right range to the right of the central range. The ranges are included in an image range captured in front of the vehicle 12 by the infrared camera 16R (see FIG. 13A, etc.). A specific process of segmenting the captured image 134 into three sub-regions will be described below with reference to FIG. 12. In FIG. 12, it is assumed that a biological target, which exists in front of the vehicle 12, is an animal 160 (see FIG. 13A, etc.).

The captured image 134 is segmented into a central region 154C corresponding to a central range including the direction of travel of the vehicle 12, a left region 154L corresponding to a left range to the left of the central range, and a right region 154R corresponding to a right range to the right of the central range. The ranges are included in a captured image range in front of the vehicle 12. The captured image 134 is segmented into the central region 154C, the left region 154L, and the right region 154R by a left boundary line 151L, which is disposed to the left of the central region 154C, and a right boundary line 151R, which is disposed to the right of the central region 154C. Segmentation of the captured image 134 shown in FIG. 12 represents a segmentation that is based on initial settings. According to the initial settings on which the segmentation is based, the captured image 134 is segmented into three equal regions along the lateral or horizontal direction.

The left boundary line 151L and the right boundary line 151R are used in a process of generating an icon image 144. The left boundary line 151L and the right boundary line 151R are not displayed in the actual captured image 134 on the general-purpose monitor 26. Data for generating the captured image 134 represent brightness data of the pixels that make up the captured image 134. Based on which region each of the pixels of the pixel group belongs to, i.e., the left region 154L, the central region 154C, or the right region 154R, it is judged whether a group of pixels making up a monitored target image belongs to the left region 154L, the central region 154C, or the right region 154R.

A relationship between the left boundary line 151L and the right boundary line 151R, and a lateral field of view of the infrared camera 16R in FIG. 12 will be described below with reference to FIGS. 13A and 13B. Left and right ends of the captured image 134 are determined by a left demarcating line 161L and a right demarcating line 161R, which serve to demarcate the lateral field of view of the infrared camera 16R within a lateral viewing angle α of the infrared camera 16R. In other words, only an object that exists within the lateral field of view between the left demarcating line 161L and the right demarcating line 161R is imaged by the infrared camera 16R and is converted into an image area in the captured image 134. Objects that exist outside of the lateral field of view between the left demarcating line 161L and the right demarcating line 161R are excluded from the captured image 134.

A central viewing angle β is defined within the lateral viewing angle α and left and right ends thereof are demarcated by an inner left demarcating line 166L and an inner right demarcating line 166R, respectively. The inner left demarcating line 166L and the inner right demarcating line 166R specify the left boundary line 151L and the right boundary line 151R, respectively, in the captured image 134. In other words, an image area representing an object within the central viewing angle β is displayed in the central region 154C of the captured image 134.

FIG. 12 shows in a lower portion thereof three icon images 144, which are arranged laterally or horizontally. The icon images 144 include respective road icons 145 and respective animal icons 157, which are located in a left position, a central position, and a right position, respectively, successively from the left to the right. In each of the icon images 144, the road icon 145 and the animal icon 157 are located in respective upper and lower positions. The road icon 145 is made up of three lines including left and right lines and a central line. The width of the gap between the left and right lines becomes progressively smaller toward the upper end, suggesting a remote position, and thus representing a scene in front of the vehicle 12 as observed from the perspective of the driver's seat in the vehicle 12.

In the first icon image 144 from the left, the animal icon 157 is displayed in a left-hand position to the left of the left line of the road icon 145, which is displayed obliquely upward to the right. In the second icon image 144 from the left, the animal icon 157 is displayed in a central position on an upward extension of the central line of the road icon 145. In the third icon image 144 from the left, the animal icon 157 is displayed in a right-hand position to the right of the right line of the road icon 145, which is displayed obliquely upward to the left.

The three icon images 144 shown in the lower portion of FIG. 12 are displayed on the MID 28 when an animal image area 149 (target image area) in the captured image 134 belongs to the left region 154L, the central region 154C, and the right region 154R, respectively.

If there are a plurality of targets existing in front of the vehicle 12, then a plurality of animal icons 157 corresponding to the targets are displayed in the icon images 144 at positions of the targets, which are spaced along the transverse direction of the vehicle 12. If plural biological image areas belong to one region, then the MID 28 may display only one biological icon at a position corresponding to that region.

As shown in the upper portion of FIG. 12, the captured image 134 is segmented into the left region 154L, the central region 154C, and the right region 154R. The relationship between the distance from the vehicle 12 to the animal 160, as a biological target, and the region to which the animal image area 149 corresponding to the animal 160 belongs in the captured image 134 will be described below with reference to FIGS. 13A and 13B.

As shown in FIGS. 13A and 13B, it is assumed that the animal 160 actually exists leftward and outwardly of a left-hand side edge of a road 131. When the animal 160 is sufficiently far from the vehicle 12, as shown in FIG. 13A, the animal 160 is positioned inside the central viewing angle β. As the vehicle 12 moves closer to the animal 160 while the animal 160 remains unchanged in position, as shown in FIG. 13B, the animal 160 becomes positioned outside of the central viewing angle β.

As the biological target becomes positioned farther from the vehicle 12, a corresponding biological icon tends to be displayed at a central position on the MID 28. Since a farther-distanced biological target, which exists within an attention calling distance, becomes more uncertain in position when the vehicle 12 actually moves closer toward the biological target, the MID 28 displays a corresponding biological icon at a central position, thereby calling attention from the driver.

A biological target, which is positioned farther from the vehicle 12, results in a corresponding biological image area having smaller dimensions in the captured image 134. If the size of the biological image area in the captured image 134 is smaller than a predetermined threshold value, then the biological image area is not extracted as a biological target. When a biological target is positioned farther from the vehicle 12 beyond a predetermined distance, even if the biological target exists within the central viewing angle β, the MID 28 does not display a corresponding biological icon in the icon image 144. The distance from the vehicle 12 up to a biological target is calculated based on a parallax effect developed by the infrared cameras 16R, 16L with respect to the biological target.

When the driver observes the MID 28 and sees an animal icon 157 displayed in the icon image 144 on the MID 28, the driver knows that an animal 160 exists in front of the vehicle 12. With respect to the position of the animal 160 along the transverse direction of the vehicle 12, from the lateral position of the animal icon 157 with respect to the road icon 145 on the MID 28, the driver can judge whether the animal 160 exists in a central, left, or right area in front of the vehicle 12, without the need to move the driver's eyes from the MID 28 to the general-purpose monitor 26.

A biological target is more likely to collide with the vehicle 12 when the biological target resides within a central range including the direction of travel of the vehicle 12 than when the biological target is in a left range or a right range on one side of the central range. Therefore, when a biological icon is in a central position in the icon image 144, i.e., the second icon image 144 from the left in the lower portion of FIG. 12, the driver is advised to pay more attention than when the biological icon is in a left position or a right position in the icon image, i.e., the first or third icon image 144 from the left in the lower portion of FIG. 12.

Segmentation according to the first embodiment represents a segmentation of the captured image 134 into three equal regions based on initial settings. However, various improvements may be made to the way in which segmentation is performed.

### [2. First Improvement].

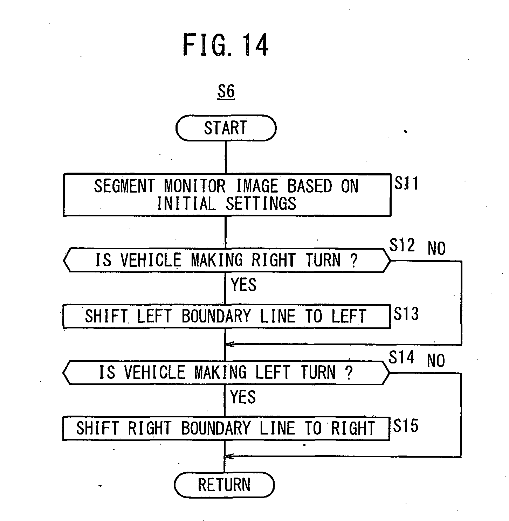

FIG. 14 is a flowchart of a processing sequence for adjusting segmentation based on the lateral position of an animal icon 157 in an icon image 144 depending on a turn made by the vehicle 12. Segmentation based on initial settings need not necessarily be a segmentation of the captured image 134 into three equal regions. Rather, segmentation based on the initial settings may be defined by segmentation of the captured image 134 into a left region 154L, a right region 154R, and a central region 154C, which is wider or narrower than the left region 154L and the right region 154R.

In step S11, the ECU 22 segments a captured image 134, which is to be displayed on the general-purpose monitor 26, based on initial settings. More specifically, the ECU 22 divides the lateral viewing angle α into three angle segments, i.e., a left angle segment, a central angle segment, and a right angle segment, and with a left boundary line 151L and a right boundary line 151R, segments the captured image 134 into three laterally equal regions, i.e., a left region 154L, a central region 154C, and a right region 154R.

In step S12, the ECU 22 checks if the vehicle 12 is making a right turn. If the vehicle 12 is making a right turn, then control proceeds to step S13. If the vehicle 12 is not making a right turn, then step S13 is skipped and control proceeds to step S14. Based on an output signal from the yaw rate sensor 20, the ECU 22 can determine whether the vehicle 12 is traveling straight forward, is making a right turn, or is making a left turn.

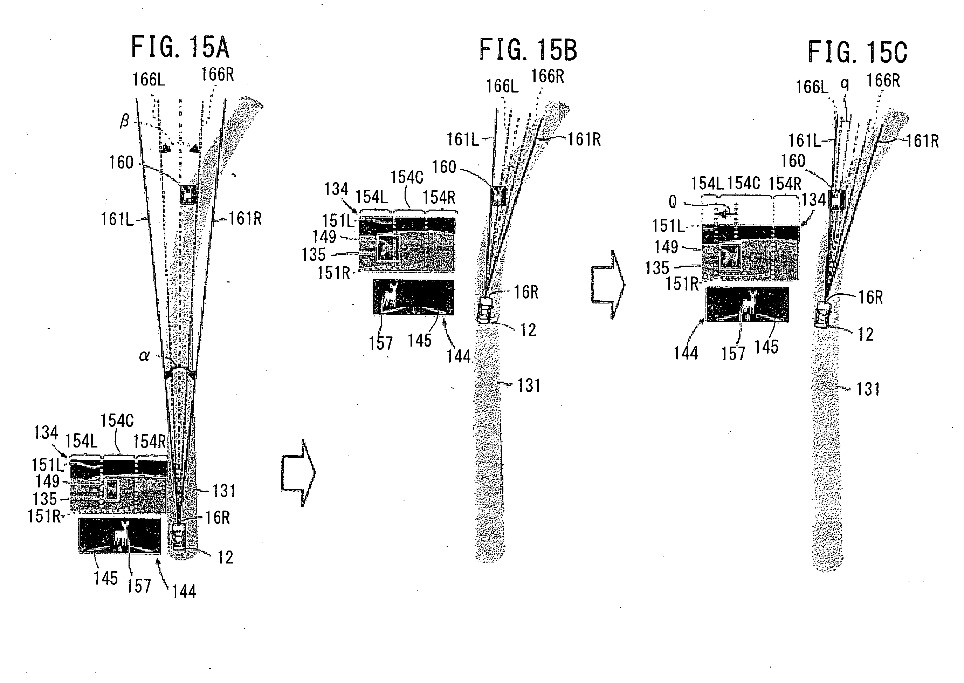

In step S13, the ECU 22 shifts the left boundary line 151L a predetermined distance to the left in the captured image 134. The reasons why the left boundary line 151L or the right boundary line 151R is shifted depending on the direction in which the vehicle 12 is turned will be described below with reference to FIGS. 15A through 15C.

In FIGS. 15A through 15C, it is assumed that an animal 160 exists on a road 131 near a left side edge thereof and within a right curve of the road 131. FIGS. 15A through 15C show a captured image 134 of the animal 160, which is displayed on the general-purpose monitor 26, and an icon image 144 of the animal 160, which is displayed on the MID 28.

In FIG. 15A, a road image area 140 is shown in which the vehicle 12 is traveling on a straight road section prior to a right curve (see FIG. 12). While the vehicle 12 is traveling straight, the captured image 134 is segmented based on initial settings. The animal 160 exists near the central line in the lateral viewing angle α and within the central viewing angle β. As a result, an animal image area 149 is displayed in the central region 154C of the captured image 134, and the animal icon 157 is disposed at a central position in the icon image 144.

FIGS. 15B and 15C show captured images 134 and icon images 144, which are displayed while the vehicle 12 is making a right turn by moving into a right curve of the road image area 140 where the animal 160 exists. FIG. 15B shows the captured image 134 and the icon image 144, which are displayed, and in which the segmentation of the captured image 134 remains unchanged corresponding to the segmentation based on the initial settings. FIG. 15C shows the captured image 134 and the icon image 144, which are displayed, and in which the segmentation of the captured image 134 is changed from the segmentation based on the initial settings (see step S11).

The horizontal distance between the vehicle 12 and a target exiting near an edge of the road 131 tends to become greater while the vehicle 12 is traveling on a curved road than while the vehicle 12 is traveling on a straight road. While the vehicle 12 is making a right turn, as shown in FIG. 15B, if segmentation of the captured image 134 remains the same as the segmentation based on the initial settings for traveling straight as shown in FIG. 15A, then even though an actual animal 160 exists on the road 131, an animal image area 149 corresponding to the animal 160 is positioned leftwardly of the inner left demarcating line 166L. Therefore, the animal image area 149, which corresponds to the animal 160, belongs to the left region 154L of the captured image 134, and the animal 160 is represented by an animal icon 157 in a left-hand position, i.e., as a target outside of the road 131, in the icon image 144. Stated otherwise, the position of the animal icon 157 differs from the actual position of the animal 160 with respect to the road 131.

While the vehicle 12 is making a right turn, the ECU 22 carries out the process of step S13, so as to shift the inner left demarcating line 166L to the left outwardly along the direction of the turn by an angle q, as shown in FIG. 15C, thereby bringing the animal 160 inwardly of the inner left demarcating line 166L along the lateral direction of the vehicle 12. As a result, in the captured image 134, the left boundary line 151L is shifted to the left by a dimension Q. Although the animal image area 149 remains in the same position in the captured image 134, the animal 160 is displayed in the icon image 144 by the animal icon 157 as a target on the road 131. Consequently, while the vehicle 12 is making a turn, the driver can properly recognize the position of the animal 160 with respect to the road 131 along the transverse direction of the vehicle 12.

In step S14 of FIG. 14, the ECU 22 checks if the vehicle 12 is making a left turn. If the vehicle 12 is making a left turn, then control proceeds to step S15. If the vehicle 12 is not making a left turn, then the process of step S6, i.e., the turn-dependent segmentation process, is brought to an end. While the vehicle 12 is traveling straight, therefore, the captured image 134 is segmented into the left region 154L, the central region 154C, and the right region 154R, according to the segmentation based on the initial settings. In step S15, the ECU 22 shifts the right boundary line 151R a predetermined distance to the right in the captured image 134.

The process of shifting the left boundary line 151L to the left while the vehicle 12 makes a right turn has been described above with reference to FIGS. 15A through 15C. The same description applies to the process of step S15, in which the right boundary line 151R is shifted to the right while the vehicle 12 makes a left turn.

### [3. Second Improvement]

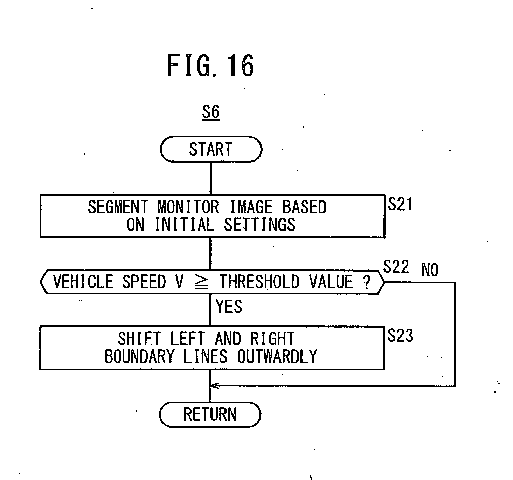

FIG. 16 is a flowchart of a processing sequence for adjusting segmentation based on the lateral position of a human icon 136 in an icon image 144 depending on the vehicle speed V.

In step S21, based on the initial settings, the ECU 22 segments a captured image 134 to be displayed on the general-purpose monitor 26. The process of step S21 is the same as in the first improvement (see step S11 of FIG. 14) described above, and thus will not be described in detail below.

In step S22, the ECU 22 checks if the vehicle speed V is equal to or greater than a threshold value. If the vehicle speed V is equal to or greater than the threshold value, then control proceeds to step S23. If the vehicle speed V is not equal to or greater than the threshold value, then the vehicle-speed-dependent segmentation process is brought to an end. In step S23, the ECU 22 shifts the left boundary line 151L and the right boundary line 151R laterally outward.

Specific modes of displaying icon images 144 will be described below with reference to FIGS. 17A and 17B. The threshold value shown in FIG. 16 (see step S22) is set to 60 [km/h], for example. FIG. 17A shows a vehicle speed V of 30 [km/h], which is an example lower than the threshold value (when the vehicle speed V is low), and FIG. 17B shows a vehicle speed V of 70 [km/h], which is an example higher than the threshold value (when the vehicle speed V is high).

In FIGS. 17A and 17B, it is assumed that a person 110 is positioned in the vicinity of the road 131 and to the left and to the right of the road 131 in front of the vehicle 12. FIG. 17A shows a central viewing angle β1, which represents a value of the central viewing angle β for carrying out segmentation based on the initial settings. The central viewing angle β1 is defined between an inner left demarcating line 166L and an inner right demarcating line 166R, which serve as straight lines that divide the lateral viewing angle α into three equal angles. Therefore, β1 = α/3. FIG. 17B shows a central viewing angle β2, which represents a value of the central viewing angle β that is wider than the central viewing angle β1 for carrying out segmentation based on the initial settings. Therefore, β2 > β1.

When the vehicle speed V is low (FIG. 17A), a left boundary line 151L and a right boundary line 151R are set to positions corresponding to the central viewing angle β1 for carrying out segmentation based on the initial settings. Depending on the central viewing angle β1, the dimension between the left boundary line 151L and the right boundary line 151R is represented by "a" in the captured image 134 on the general-purpose monitor 26. At this time, since a human image area 133 (target image area) in the captured image 134 belongs to the left region 154L, a human icon 136 is displayed at a left position in the icon image 144.

When the vehicle speed V is high (FIG. 17B), depending on the central viewing angle β2, the dimension between the left boundary line 151L and the right boundary line 151R is represented by "b" (b > a) in the captured image 134 on the general-purpose monitor 26. As a result, since a human image area 133 in the captured image 134 belongs to the central region 154C, a human icon 136 is displayed at a central position in the icon image 144.

While the vehicle 12 is traveling at high speed, the time required for the vehicle 12 to approach a target in front of the vehicle 12 is shorter than while the vehicle 12 is traveling at low speed, and thus, the driver needs to pay more attention to the target. While the vehicle 12 is traveling at high speed, in step S23, the left boundary line 151L between the central region 154C and the left region 154L, and the right boundary line 151R between the central region 154C and the right region 154R are displaced toward the left region 154L and the right region 154R, respectively. Consequently, a biological image area such as the human image area 133, which normally is displayed as belonging to the left region 154L or the right region 154R on the MID 28 while the vehicle 12 is traveling at low speed, is displayed as belonging to the central region 154C on the MID 28 while the vehicle 12 is traveling at high speed. Therefore, while the vehicle 12 is traveling at high speed, the distance from the vehicle 12 to the biological target at the time that attention starts to be called from the driver is increased, so as to prevent a delay in calling the attention of the driver.

In the vehicle-speed-depending segmentation process shown in FIGS. 17A through 17B, the dimension between the left boundary line 151L and the right boundary line 151R changes between the two dimensions "a" and "b". However, the dimension between the left boundary line 151L and the right boundary line 151R may change between three or more dimensions depending on the vehicle speed V. Furthermore, the dimension between the left boundary line 151L and the right boundary line 151R may be changed continuously depending on the vehicle speed V.

### [4. Supplementary Remarks]

The segmentation process, which is improved in the foregoing manner, allows the driver to pay attention according to an appropriate process, which depends on the manner in which the vehicle 12 is presently being driven. The above modifications may be applied to the first embodiment or to a second embodiment, which will be described in detail below.

### C. Second Embodiment

A vehicle periphery monitoring apparatus 210 according to a second embodiment of the present invention will be described below.

### [1. Arrangement]

FIG. 18 is a block diagram showing the arrangement of the vehicle periphery monitoring apparatus 210 according to the second embodiment of the present invention. The vehicle periphery monitoring apparatus 210 includes infrared cameras 16L, 16R, a vehicle speed sensor 18, a yaw rate sensor 20, a speaker 24, a general-purpose monitor 26, an MID 28 (refer to the vehicle periphery monitoring apparatus 10 shown in FIG. 1), a brake sensor 19, and an image processing unit 214. The brake sensor 19 detects a depth Br to which the brake pedal of the vehicle 12 is depressed by the driver (hereinafter referred to as a "brake pedal depression depth Br") and supplies the detected brake pedal depression depth Br to the image processing unit 214.

The image processing unit 214, which controls the vehicle periphery monitoring apparatus 210, includes an A/D conversion circuit, not shown, for converting supplied analog signals into digital signals, a CPU (Central Processing Unit) 214c for performing various processing operations, a memory 214m for storing various data used in an image processing routine, and an output circuit, not shown, for supplying drive signals to the speaker 24 as well as display signals to the general-purpose monitor 26 and the MID 28.

The CPU 214c functions as a target detector 240, a position calculator 242, which includes a first position calculator 244, a second position calculator 246, and an actual position calculator 248, an attention degree evaluator 250, which includes a sole evaluator 252 and a comparative evaluator 254, and a display mark determiner 256.

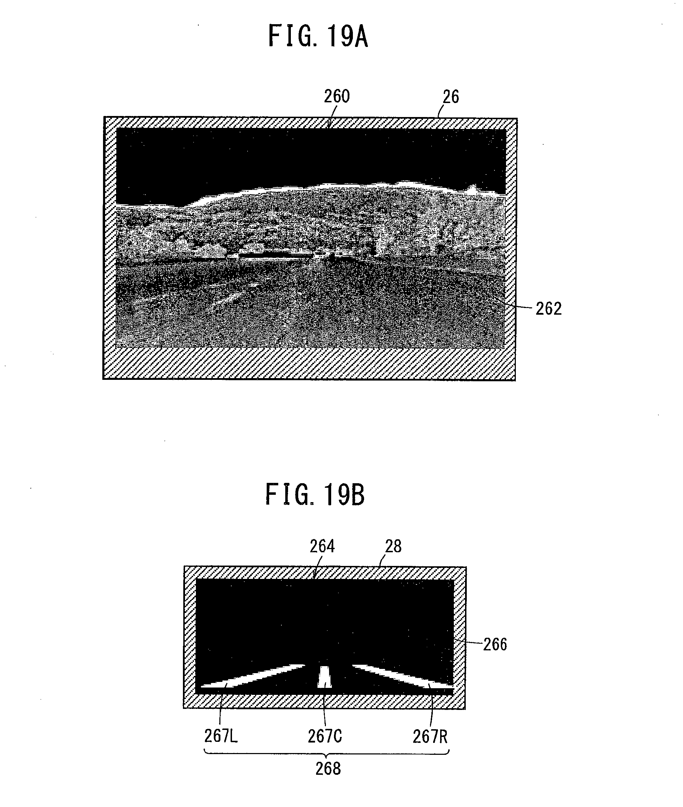

FIG. 19A is a front elevational view of the general-purpose monitor 26, and FIG. 19B is a front elevational view of the MID 28.

The general-purpose monitor 26 shown in FIG. 19A has a horizontally elongate rectangular first display region 260 arranged substantially on the front surface thereof. In FIG. 19A, the general-purpose monitor 26 displays a first image 262, which is based on a captured image signal supplied from the infrared camera 16L, in the first display region 260.

The MID 28 shown in FIG. 19B has a horizontally elongate rectangular second display region 264 arranged substantially on the front surface thereof. In FIG. 19B, the MID 28 displays a second image 266, which represents a predetermined feature area extracted and modified from the first image 262, in the second display region 264. In FIG. 19B, a road icon 268 is displayed as a specific example in a lower portion of the second display region 264. The road icon 268 is made up of three lines, i.e., lines 267L, 267C, 267R, which are arranged successively from the left.

The vehicle periphery monitoring apparatus 210 is incorporated in a vehicle 12, in the same manner as the vehicle periphery monitoring apparatus 10 according to the first embodiment (see FIGS. 2 and 3). Therefore, specific descriptions of the manner in which the vehicle periphery monitoring apparatus 210 is incorporated in the vehicle 12 will be omitted below. The vehicle periphery monitoring apparatus 210 according to the second embodiment basically is constructed as described above.

### [2. Operations of Vehicle Periphery Monitoring Apparatus 210]

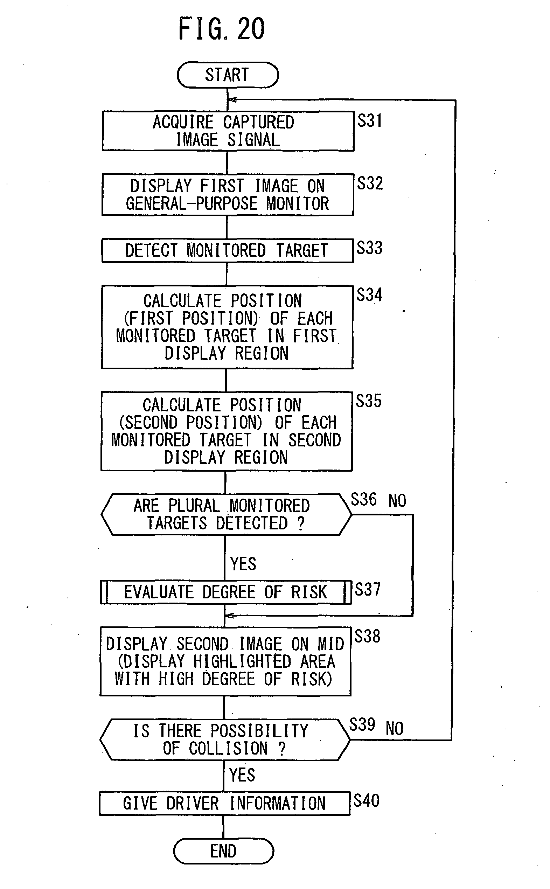

Operations of the vehicle periphery monitoring apparatus 210 will be described below with reference to the flowchart shown in FIG. 20 as well as other figures.

In step S31, the image processing unit 214 acquires captured image signals at the present time from the infrared cameras 16L, 16R, which capture images of the periphery of the travelling vehicle 12. If the infrared cameras 16L, 16R capture images at intervals of about 33 ms, for example, then either one of the infrared cameras 16R or 16L continuously or intermittently produces a captured image signal having 30 frames per second.

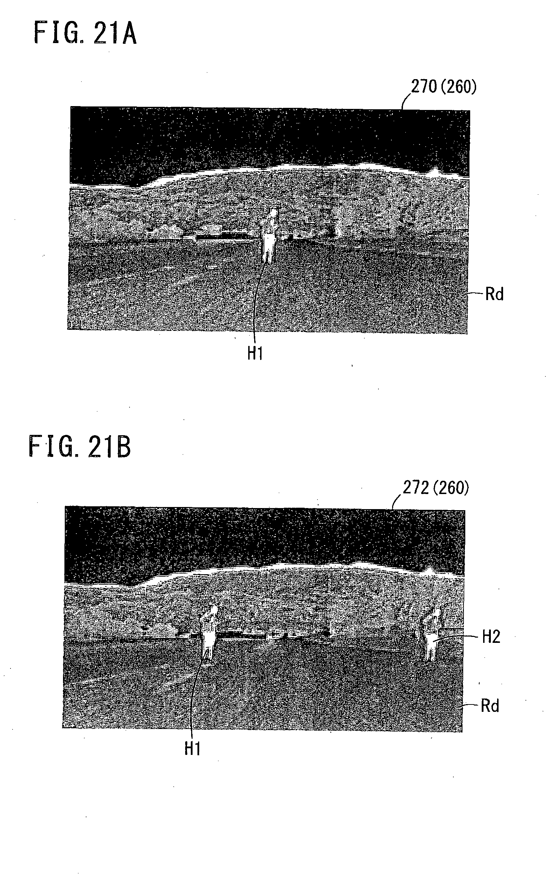

In step S32, the image processing unit 214 supplies the captured image signal from one of the infrared cameras 16L, 16R, e.g., the infrared camera 16L, to the general-purpose monitor 26. The general-purpose monitor 26 displays a first image 270 (FIG. 21A) or 272 (FIG. 21B), which is captured at the present time, in the first display region 260 (see FIG. 19A). The general-purpose monitor 26 is capable of displaying various images apart from the first image 270 or 272, depending on settings established by a non-illustrated operating unit. If the general-purpose monitor 26 is currently displaying another image or video image, then the present step is omitted.

The first image 270 in FIG. 21A shows a human area H1 (actually, a single human) as a target image area, which exists in a road surface region Rd (actually, a road surface). The first image 272 in FIG. 21B shows the human area H1, which exists in the road surface region Rd, and another human area H2 (actually, another single human) as a target image area, which exists at an edge (actually, a road shoulder) of the road surface region Rd.

In step S33, the target detector 240 detects a monitored target from an image region represented by the captured image signal. Examples of the monitored target include various animals (specifically, mammals such as deer, horses, sheep, dogs, cats, etc., birds, etc.) and artificial structures (specifically, power poles, guardrails, walls, etc.). The target detector 240 may make use of any appropriate one of various known detecting algorithms, which is suitable for the type of target that is monitored.

In step S34, the first position calculator 244 calculates the position or an existing range (hereinafter referred to as a "first position") of each of the monitored targets in the first display region 260. If the general-purpose monitor 26 possesses high display resolution, then the first position calculator 244 is capable of identifying the position of the monitored targets with high accuracy.

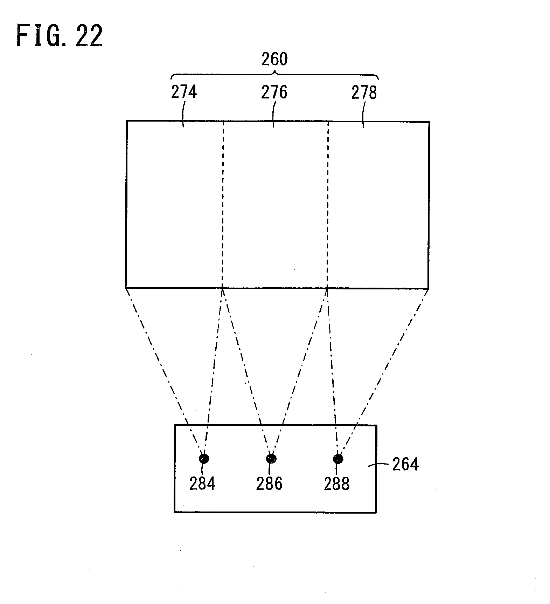

In step S35, the second position calculator 246 calculates the position of each of the monitored targets (hereinafter referred to as a "second position") in the second display region 264. The associated relationship between the first position in the first display region 260 and the second position in the second display region 264 will be described below with reference to FIG. 22.

As shown in FIG. 22, the first display region 260 of the general-purpose monitor 26 is divided into three equal regions, i.e., a left region 274, a central region 276, and a right region 278, which are arranged successively from the left. The second display region 264 of the MID 28 includes three positions defined therein, i.e., a left position 284, a central position 286, and a right position 288, which are arranged successively from the left. The left region 274 is associated with the left position 284, the central region 276 is associated with the central position 286, and the right region 278 is associated with the right position 288.

Division of the first display region 260 is not limited to the example shown in FIG. 22, and the first display region 260 may be divided in other ways. For example, the first display region 260 may be divided into two regions or four or more regions. The central region 276 may be greater (or smaller) in size than the left region 274 and the right region 278. The first display region 260 may be divided vertically rather than horizontally. Furthermore, the first display region 260 may be divided along road lanes, i.e., into regions that are shaped in the form of an inverted chevron.

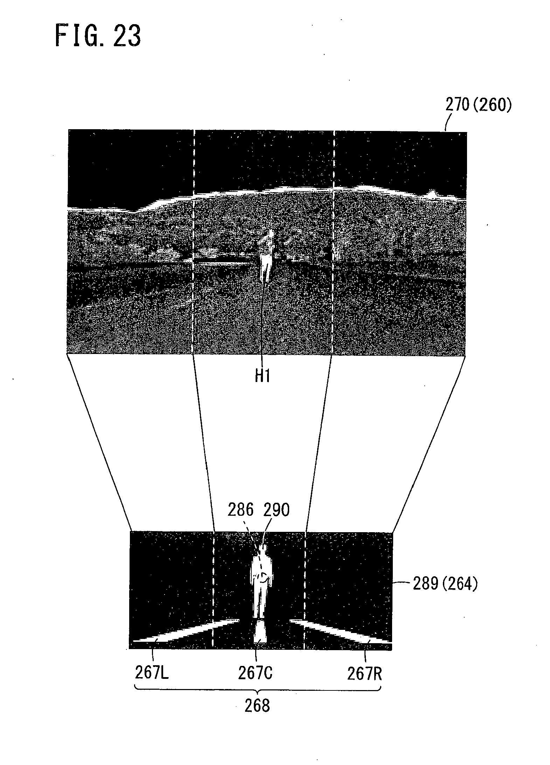

In step S36, the target detector 240 judges whether or not a plurality of monitored targets are detected from the result of step S33. If no monitored target or if only one monitored target is detected, then in step S38, the image processing unit 214 supplies the MID 28 with a display signal representing the second image 266 (see FIG. 19B), or a display signal representing a second image 289 (see FIG. 23). The MID 28 displays the second image 289 at the present time in the second display region 264.

Prior to displaying the second image 289 (FIG. 23), the display mark determiner 256 determines the form (e.g., shape, color, etc.) of a mark to be displayed on the MID 28. In the first image 270 shown in FIG. 21A, since the human area H1 is detected in the central region 276 (see FIG. 22) of the first display region 260, the display mark determiner 256 determines that a human icon in an ordinary display color (e.g., white) should be placed at the central position 286 (see FIG. 22).

As a result, as shown in FIG. 23, a white human icon 290 is displayed substantially centrally in the second display region 264. Inasmuch as the human icon 290, which is shaped like the monitored target, is displayed as a mark on the MID 28, the driver can recognize the type of monitored target at a glance. If the type of monitored target is an animal, then an animal icon may be displayed as a mark on the MID 28. Therefore, the second image 289 corresponds to an image in which information (type, existence or non-existence, number) is visualized as to whether a monitored target exists or not.

When marks are displayed respectively in positions (the left position 284, the central position 286, and the right position 288) that match the layout of the three sub-regions (the left region 274, the central region 276, and the right region 278), the driver can instinctively recognize whether or not a monitored target exists, as well as the position of a monitored target, if any.

In step S39, the image processing unit 214 determines whether or not there is a possibility of collision of the vehicle 12 with a monitored target. If the image processing unit 214 judges that there is no possibility of collision of the vehicle 12 with a monitored target, then control returns to step S31, and steps S31 through S38 are repeated.

If the image processing unit 214 judges that there is a possibility of collision of the vehicle 12 with a monitored target, then the vehicle periphery monitoring apparatus 210 produces a warning sound via the speaker 24, for example, thereby giving the driver information concerning the possibility of a collision in step S40. Accordingly, the driver is prompted to control the vehicle 12 to avoid the collision.

### [3. Description of Step S37]

If two or more monitored targets are detected in step S36 in FIG. 20, then control proceeds to step S37. As shown in FIG. 21B, it is assumed that one monitored target exists in each of the central region 276 and in the right region 278 (see FIG. 22), for example.

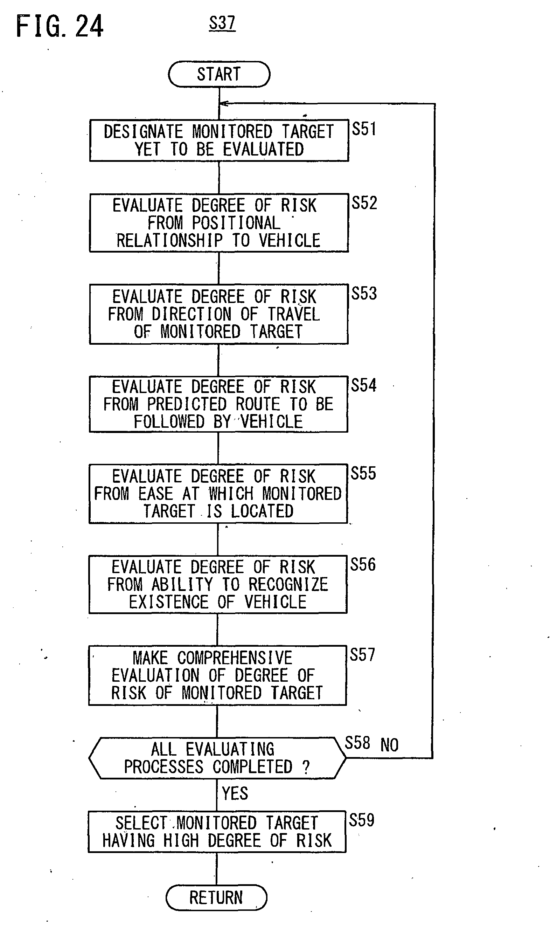

According to the present embodiment, the attention degree evaluator 250 evaluates the possibility of collision of a monitored target with the vehicle 12 (hereinafter referred to as a "degree of risk"). A process of evaluating a degree of risk, which is performed in step S37, will be described in detail below with reference to the flowchart shown in FIG. 24.

In step S51, the attention degree evaluator 250 designates a monitored target which is yet to be evaluated. The sole evaluator 252 evaluates a degree of risk at the present time with respect to the designated monitored target in view of various states, i.e., by implementing steps S52 through S57, to be described below.

In step S52, the sole evaluator 252 evaluates a degree of risk of collision of a monitored target with the vehicle 12 from the positional relationship between the monitored target and the vehicle 12. Prior to evaluating the degree of risk, the actual position calculator 248 calculates the actual position of the monitored target, e.g., a human body corresponding to the human area H1, and the actual distance between the monitored target and the vehicle 12, from a pair of captured image signals from the infrared cameras 16R, 16L, according to a known process such as triangulation. If the distance between the monitored target and the vehicle 12 is small, then the sole evaluator 252 judges that there is a high possibility of collision of the vehicle 12 with the monitored object. On the other hand, if the distance between the monitored target and the vehicle 12 is large, then the sole evaluator 252 judges that there is a low possibility of collision of the vehicle 12 with the monitored object.

In step S53, the sole evaluator 252 evaluates a degree of risk of collision of the vehicle 12 with a monitored target from the direction of movement of the monitored target.

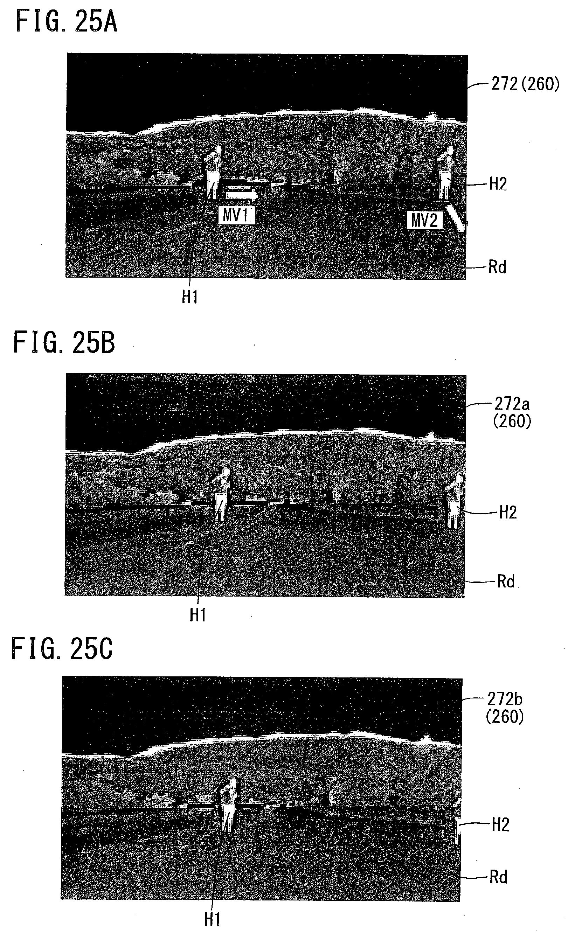

FIGS. 25A through 25C are views illustrating a process of evaluating a degree of risk from a direction along which the monitored target moves. It is assumed that a first pedestrian existing on the road surface traverses the road, whereas a second pedestrian walks along a road shoulder. The human area H1 shown in FIG. 25A (first image 272) moves over time along the direction of the arrow MV1, or stated otherwise, moves to the position shown in FIG. 25B (first image 272a), and thereafter, the human area H1 moves to the position shown in FIG. 25C (first image 272b). The human area H2 shown in FIG. 25A moves over time along the direction of the arrow MV2, or stated otherwise, moves to the position shown in FIG. 25B, and thereafter, moves to the position shown in FIG. 25C. The arrow MV1 represents a motion vector (distance moved per unit time) of the first pedestrian, whereas the arrow MV2 represents a motion vector (distance moved per unit time) of the second pedestrian.

The sole evaluator 252 evaluates a degree of risk of collision of the vehicle 12 with the monitored targets depending on the motion vectors, or more specifically, depending on directions of the motion vectors. For example, since the motion vector MV1 of the human area H1 lies substantially parallel to the horizontal direction of the first image 272, the sole evaluator 252 presumes that the human area H1 represents a pedestrian walking across the road, and judges that the vehicle 12 has a high degree of risk of colliding with the monitored target. On the other hand, since the motion vector MV2 of the human area H2 is inclined a certain angle or greater with respect to the horizontal direction of the first image 272, the sole evaluator 252 presumes that the human area H2 does not represent a pedestrian walking across the road, and judges that the vehicle 12 has a low degree of risk of colliding with the monitored target.

In step S54, the sole evaluator 252 evaluates a degree of risk of collision of the vehicle 12 with a monitored target depending on a predicted route followed by the vehicle 12.

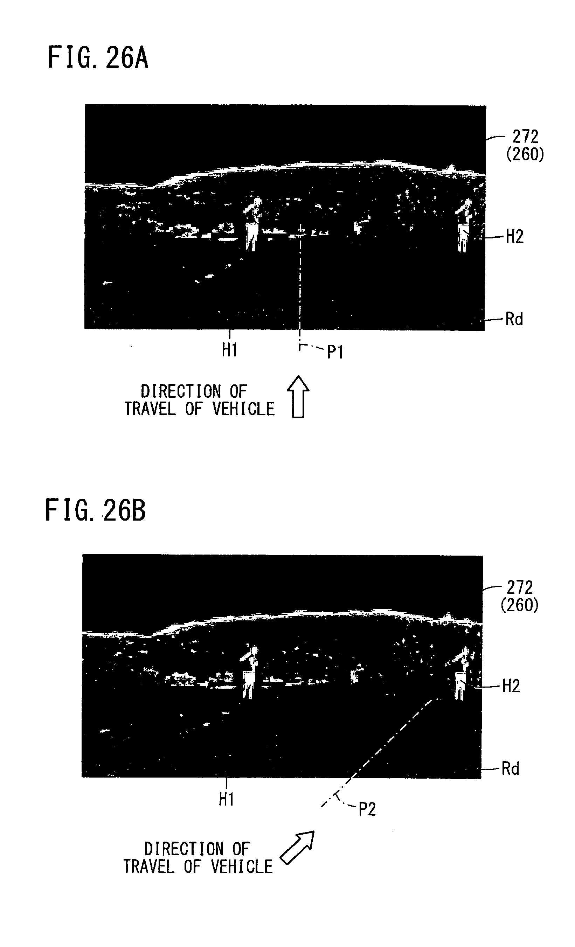

As shown in FIGS. 26A and 26B, imaginary lines P1, P2, as indicated by the dot-and-dash lines, are drawn on the first image 272 along the direction of travel of the vehicle 12. The direction of travel is indicated by the arrows. The imaginary lines P1, P2 represent a predicted route to be followed by the vehicle 12.

In FIG. 26A, the distance that the human area H1 is spaced from the predicted route P1 is smaller than the distance that the human area H2 is spaced from the predicted route P1. Therefore, the sole evaluator 252 predicts that the vehicle 12 is likely to collide with the first pedestrian (human area H1) if the vehicle 12 is driven continuously in the same manner, and judges that the vehicle 12 has a high degree of risk of colliding with the monitored target. On the other hand, the sole evaluator 252 predicts that the vehicle 12 is not likely to collide with the second pedestrian (human area H2) if the vehicle 12 is driven continuously in the same manner, and judges that the vehicle 12 has a low degree of risk of colliding with the monitored target.

In FIG. 26B, the distance that the human area H1 is spaced from the predicted route P2 is greater than the distance that the human area H2 is spaced from the predicted route P2. Therefore, assuming that the vehicle 12 is driven continuously in the same way, the sole evaluator 252 predicts that the vehicle 12 is likely to collide with the second pedestrian (human area H2), and judges that the vehicle 12 has a high degree of risk of colliding with the monitored target. On the other hand, assuming that the vehicle 12 is driven continuously in the same way, the sole evaluator 252 predicts that the vehicle 12 is not likely to collide with the first pedestrian (human area H1), and judges that the vehicle 12 has a low degree of risk of colliding with the monitored target.

In step S55, the sole evaluator 252 evaluates a degree of risk of collision of the vehicle 12 with a monitored target from the ease with which the driver is able to locate the monitored target. More specifically, a state in which the driver finds it difficult to locate the monitored target is presupposed, and the sole evaluator 252 evaluates the presupposed state as having a high degree of risk, regardless of whether or not the driver has actually located the monitored target. For example, the presupposed state may represent a detected area having a small size, a small movement distance (motion vector), a detected area having a shape that differs from a normal shape, etc. Specific examples of detected areas having a normal shape include a walking pedestrian, a running pedestrian, a standing pedestrian, etc., whereas specific examples of detected areas having an abnormal shape include a squatting pedestrian, a pedestrian who is lying down, etc.

The driver also finds it difficult to locate a monitored target if a difference in color between the color of the monitored target and the background color is small, for example, when a pedestrian is wearing neutral and dark clothes at night. Such a monitored target can be distinguished based on a difference between the brightness of the monitored target and the background brightness, in a grayscale image acquired by the infrared cameras 16L, 16R. The monitored target can also be distinguished based on a difference between the color of the monitored target and the background color in a color space such as CIERGB, CIELAB, or the like, in a color image acquired by a color camera.

In step S56, from the ability of the monitored target to recognize the existence of the vehicle 12, the sole evaluator 252 evaluates a degree of risk of collision of the vehicle 12 with a monitored target. More specifically, a state in which the monitored target is incapable of recognizing the existence of the vehicle 12 is presupposed, and the sole evaluator 252 evaluates the presupposed state as having a high degree of risk, regardless of whether or not the monitored target actually has recognized the existence of the vehicle 12. For example, the sole evaluator 252 can judge whether or not the vehicle 12 lies within the field of vision of the monitored target, by detecting the attitude of the monitored target (e.g., a facial direction if the monitored target is a human). The sole evaluator 252 may evaluate a face that is directed away from the vehicle 12, a face that is directed sideways, and a face that is directed toward the vehicle 12 as possessing progressively lower degrees of risk.

The direction of the face can be detected with high accuracy based on the brightness of a binary image of the head, i.e., the ratio of on-pixels of the binary image. If a human turns his or her face toward the vehicle 12, the area of bare skin (on-pixels) of the head becomes greater, whereas if a human turns his or her back toward the vehicle 12, the area of hair (off-pixels) of the head becomes greater. The sole evaluator 252 may also presume intermediate states (facing sideways or facing obliquely), other than the states of facing toward the vehicle 12 and facing away from the vehicle 12.

The sole evaluator 252 may further presume the situation judging ability and/or behavior predictability of a monitored target, and reflect the presumed situation judging ability and/or behavior predictability in evaluating a degree of risk. For example, based on the shape or behavior of the detected area of the monitored target, the sole evaluator 252 may judge whether a monitored target, which is judged as being a human, is an elderly person or a child, and evaluate the judged and monitored target as having a high degree of risk.

In step S57, the sole evaluator 252 makes a comprehensive evaluation of a degree of risk of the monitored target that was designated in step S51. The degree of risk may be represented in any data format, such as a numerical value or a level. The levels of importance (weighting) of evaluation values, which are calculated in steps S52 through S56, may be changed as desired. For example, a degree of risk basically is evaluated based on the positional relationship between a monitored target and the vehicle 12 (see step S52). Further, if plural monitored targets having a high degree of risk are present, then other evaluation values (see steps S53 through S56) may also be taken into account for carrying out evaluation thereof.

In step S53, the accuracy in evaluating the degree of risk is increased by also taking into account a predicted motion of a monitored target. In step S54, the accuracy in evaluating the degree of risk is increased by also taking into account a predicted route followed by the vehicle 12. In step S55, the accuracy in evaluating the degree of risk is increased by also taking into account an evaluation from the viewpoint of the driver. In step S56, the accuracy in evaluating the degree of risk is increased by also taking into account an evaluation from the viewpoint of the monitored target. The first image 272 or other items of input information, e.g., the vehicle speed V, the brake pedal depression depth Br, the yaw rate Yr, and distance information which is acquired from a GPS (Global Positioning System) or a distance measuring means, may be used in evaluating the degrees of risk in steps S53 through S56.

In step S58, the attention degree evaluator 250 judges whether or not all of the processes of evaluating each monitored target have been completed. If the attention degree evaluator 250 judges that all of the evaluating processes have not been completed, then control returns to step S51, and steps S51 through S57 are repeated until all of the evaluating processes have been completed. If the attention degree evaluator 250 judges that all of the evaluating processes have been completed, then control proceeds to step S59.

In step S59, the comparative evaluator 254 selects at least one monitored target as having a high degree of risk from among a plurality of monitored targets. The comparative evaluator 254 may select only one monitored target, or two or more monitored targets, as having a high degree of risk. It is assumed that the human area H1 is selected from two monitored targets (human areas H1, H2).

In this manner, step S37 comes to an end. In step S38, the MID 28 displays a second image 291 at the present time in the second display region 264 (see FIG. 19B).

Prior to displaying the second image 291, the display mark determiner 256 determines the form of the mark to be displayed on the MID 28. In the first image 272 shown in FIG. 21B, since the human area H1 is detected in the central region 276 (see FIG. 22) of the first display region 260, the display mark determiner 256 determines that a human icon should be placed at the central position 286 (see FIG. 22). Since the human area H2 is detected in the right region 278 (see FIG. 22) of the first display region 260, the display mark determiner 256 determines that a human icon should be placed at the right position 288 (see FIG. 22). Further, since the comparative evaluator 254 has evaluated that the degree of risk of the human area H1 is higher, the display mark determiner 256 displays the human icon, which is placed at the central position 286, in a more noticeable display color (e.g., red), and displays the human icon, which is placed at the right position 288, in an ordinary display color (e.g., white).

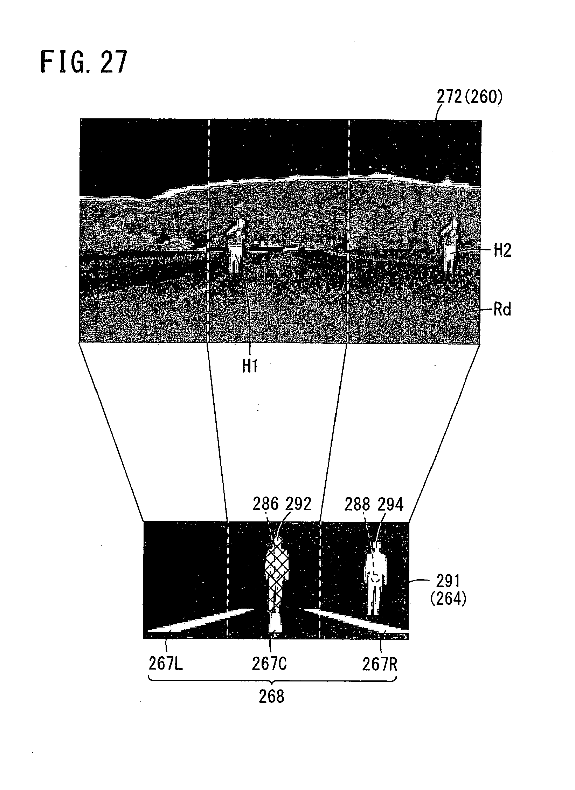

As a result, as shown in FIG. 27, the second display region 264 displays a red human icon 292 in a substantially central region thereof, and also a white human icon 294 in a right-hand region thereof. When the driver sees the MID 28, the driver's eyes turn toward the red human icon 292, which is visually highlighted. Based on the relative positional relationship between the human icon 292 and the first display region 260, increased alertness in the driver is aroused and directed toward the central region of the first image 272, i.e., the area in front of the vehicle 12. In other words, the existence of a monitored target, the attention level of which is relatively high from among a plurality of monitored targets, is indicated prominently to the driver.

The human icons 292, 294 may be displayed in different display modes, for example, by displaying the human icon 292 in a way less noticeable than ordinary, rather than displaying the human icon 294 in a way more noticeable than ordinary, or by displaying the human icons 292, 294 in combined ways less and more noticeable than ordinary. The different display modes for displaying the human icons 292, 294 may include, other than different colors, any means such as different shapes (e.g., sizes), or different visual effects (e.g., blinking or fluctuating), insofar as such modes of display can impart relative visibility differences to a plurality of marks.

### [4. Advantages]

According to the second embodiment, when monitored targets (human areas H1, H2) are detected from two or more sub-regions (e.g., the central region 276 and the right region 278), the MID 28 displays the human icons 292, 294 in different display modes depending on the degree of risk evaluated by the attention degree evaluator 250. Consequently, the difference between the degrees of attention of the monitored targets can be indicated to the driver for assisting in driving the vehicle 12. The degree of risk (degree of attention) represents a possibility that a monitored target can collide with the vehicle 12.

### D. Modifications

The present invention is not limited to the aforementioned first and second embodiments, but may employ various arrangements based on the details of the disclosure of the present invention. For example, the present invention may employ the following arrangements.

### [1. Objects in which the Vehicle Periphery Monitoring Apparatus can be Incorporated]

In the above embodiments, the vehicle 12 is assumed to be a four-wheel vehicle (see FIG. 2). However, the vehicle 12 in which the vehicle periphery monitoring apparatus 10, 210 can be incorporated is not limited to a four-wheel vehicle. Rather, the vehicle periphery monitoring apparatus 10, 210 may be incorporated in a two-wheeled vehicle (including a bicycle), a three-wheeled vehicle, or a sixwheeled vehicle.

In the above embodiments, the vehicle periphery monitoring apparatus 10, 210 is incorporated in the vehicle 12. However, the vehicle periphery monitoring apparatus 10, 210 may be incorporated in another mobile object, insofar as the device detects a monitored target in the periphery of the mobile object and indicates the detected monitored target to the user. The mobile object may be a ship or an aircraft, for example.

### [2. Image Capturing Means]

In the above embodiments, the two infrared cameras 16L, 16R are used as image capturing means for capturing images in the periphery of the vehicle 12. However, the image capturing means are not limited to infrared cameras 16L, 16R, insofar as the image capturing means are capable of capturing images in the periphery of the vehicle 12. For example, the image capturing means may be multiocular (stereo camera) or monocular (single camera). Instead of infrared cameras, the image capturing means may comprise cameras (color cameras), which use light having wavelengths primarily in the visible range, or may comprise both color and infrared cameras.

### [3. General-Purpose Monitor 26 (First Display Unit) and MID 28 (Second Display Unit)]

In the above embodiments, the general-purpose monitor 26 is used to display the grayscale image 72 from the infrared camera 16L. However, any type of display unit may be used, insofar as the display unit is capable of displaying images captured by image capturing means. In the above embodiments, the highlighting frame 76 is displayed within the grayscale image 72 that is displayed on the general-purpose monitor 26. However, the grayscale image 72 from the infrared camera 16L may be displayed in an unmodified form on the general-purpose monitor 26 without any highlighting features added thereto.

In the above embodiments, a relatively versatile display unit, which operates in a non-interlace mode, is used as the MID 28 for displaying biological icons (marks). However, a plurality of (e.g., three) indicators, which are arranged in an array for displaying only biological icons, may be used instead of the MID 28. Alternatively, a head-up display (HUD), such as that shown in FIG. 2 of Japanese Laid-Open Patent Publication No. 2004-364112, may be used in place of the MID 28.

In the above embodiments, the general-purpose monitor 26 and the MID 28 both are used. However, only the MID 28 may be used. If only the MID 28 is used, then the grayscale image 72 acquired by the infrared camera 16L is displayed on the MID 28.

## Claims

1. A vehicle periphery monitoring apparatus (10, 210) for detecting a monitored target (110, 160) in the periphery of a vehicle (12) based on a captured image signal generated by an image capturing device (16R, 16L) mounted on the vehicle (12), comprising:
a first display unit (26) that displays a captured image (72, 134, 262, 270, 272, 272a, 272b) represented by the captured image signal; and
a second display unit (28) that visualizes information concerning whether or not the monitored target (110, 160) exists in a plurality of sub-regions (90R, 90C, 90L, 154R, 154C, 154L, 274, 276, 278), which make up the captured image (72, 134, 262, 270, 272, 272a, 272b) displayed on the first display unit (26), based on whether or not marks (86, 136, 157, 290, 292, 294) associated respectively with the sub-regions (90R, 90C, 90L, 154R, 154C, 154L, 274, 276, 278) are displayed;
**characterized by**
an attention degree evaluator (44, 250) that evaluates a degree of attention of the monitored target (110, 160) for the vehicle (12), if at least one instance of the monitored target (110, 160) is detected in the captured image (72, 134, 262, 270, 272, 272a, 272b),
wherein the second display unit (28) displays the marks (86, 136, 157, 290, 292, 294) in different display modes depending on the degree of attention evaluated by the attention degree evaluator (44, 250).

2. The vehicle periphery monitoring apparatus (10) according to claim 1, wherein the degree of attention represents a misidentifying possibility that a driver or occupant of the vehicle (12) may possibly misidentify the position of the monitored target (110, 160) by visually recognizing the mark (86, 136, 157) that is displayed; and
if it is judged that the misidentifying possibility is high, then the second display unit (28) simultaneously or alternately displays the marks (86, 136, 157) corresponding to one of the sub-regions (90R, 90C, 90L, 154R, 154C, 154L) in which at least a portion of the monitored target (110, 160) exists and an adjacent one of the sub-regions (90R, 90C, 90L, 154R, 154C, 154L).

3. The vehicle periphery monitoring apparatus (10) according to claim 2, wherein the attention degree evaluator (44) judges that the misidentifying possibility is high if the monitored target (110, 160) exists on one of boundary lines (92R, 92L, 151R, 151L) between the sub-regions (90R, 90C, 90L, 154R, 154C, 154L).

4. The vehicle periphery monitoring apparatus (10) according to claim 2, wherein the attention degree evaluator (44) judges that the misidentifying possibility is high before or after the monitored target (110, 160) moves across one of boundary lines (92R, 92L, 151R, 151L) between the sub-regions (90R, 90C, 90L, 154R, 154C, 154L).

5. The vehicle periphery monitoring apparatus (10) according to claim 2, wherein the attention degree evaluator (44) judges that the degree of attention is high if the monitored target (110, 160) is highly likely to collide with the vehicle (12).

6. The vehicle periphery monitoring apparatus (210) according to claim 1, wherein the degree of attention represents a possibility of collision of the monitored target (110, 160) with the vehicle (12);
the attention degree evaluator (250) evaluates the possibility of collision of each monitored target (110, 160) if the monitored targets (110, 160) are detected respectively in at least two of the sub-regions (274, 276, 278); and
the second display unit (28) displays the marks (290, 292, 294) in different display modes depending on the possibility of collision.

7. The vehicle periphery monitoring apparatus (210) according to claim 6, wherein the second display unit (28) displays one of the marks (292) depending on at least one monitored target (110, 160) whose possibility of collision is evaluated as being high, so as to be more visually highlighted than another one of the marks (290, 294) depending on another one of the monitored targets (110, 160).

8. The vehicle periphery monitoring apparatus (210) according to claim 6, wherein the attention degree evaluator (250) judges whether or not it is easy for the driver of the vehicle (12) to locate the monitored target (110, 160) based on at least the captured image signal, and evaluates the possibility of collision depending on the result of the judgment.

9. The vehicle periphery monitoring apparatus (210) according to claim 6, wherein the attention degree evaluator (250) judges whether or not the monitored target (110, 160) recognizes the existence of the vehicle (12) based on at least the captured image signal, and evaluates the possibility of collision depending on the result of the judgment.

10. The vehicle periphery monitoring apparatus (210) according to claim 6, wherein the attention degree evaluator (250) predicts a route to be followed by the vehicle (12), and evaluates the possibility of collision depending on the predicted route.

11. The vehicle periphery monitoring apparatus (210) according to claim 6, wherein the attention degree evaluator (250) predicts a direction of travel of the monitored target (110, 160), and evaluates the possibility of collision depending on the predicted direction of travel.

12. The vehicle periphery monitoring apparatus (10, 210) according to claim 1, wherein the sub-regions (90R, 90C, 90L, 154R, 154C, 154L, 274, 276, 278) comprise a central region (90C, 154C, 276) corresponding to a central range that includes a direction of travel of the vehicle (12), a left region (90L, 154L, 274) corresponding to a left range that is positioned to the left of the central range, and a right region (90R, 154R, 278) corresponding to a right range that is positioned to the right of the central range, in an image range captured in front of the vehicle (12) by the image capturing device (16R, 16L).

13. The vehicle periphery monitoring apparatus (10, 210) according to claim 12, further comprising:
a region selector (52, 242) that selects one of the sub-regions (90R, 90C, 90L, 154R, 154C, 154L, 274, 276, 278) to which a target image area (74, 133, 149, H1, H2) sought as an image area of the monitored target (110, 160) from the captured image (72, 134, 262, 270, 272, 272a, 272b) belongs,
wherein the region selector (52, 242) selects the central region (90C, 154C, 276) if the target image area (74, 133, 149, H1, H2) is positioned on a boundary line (92L, 151L) between the central region (90C, 154C, 276) and the left region (90L, 154L, 274), or is positioned on a boundary line (92R, 151 R) between the central region (90C, 154C, 276) and the right region (90R, 154R, 278).

14. The vehicle periphery monitoring apparatus (10) according to claim 12, further comprising:
a direction-of-turn detecting sensor (20) that detects a direction of turn of the vehicle (12); and
a boundary line setter (50) that displaces the boundary line (92R, 151R) between the central region (90C, 154C) and the right region (90R, 154R) toward the right region (90R, 154R) if the direction-of-turn detecting sensor (20) detects a left turn of the vehicle (12), and displaces the boundary line (92L, 151 L) between the central region (90C, 154C) and the left region (90L, 154L) toward the left region (90L, 154L) if the direction-of-turn detecting sensor (20) detects a right turn of the vehicle (12).

15. The vehicle periphery monitoring apparatus (10, 210) according to claim 12, further comprising:
a vehicle speed sensor (18) that detects a vehicle speed (V) of the vehicle (12); and
a boundary line setter (50) that displaces the boundary line (92R, 151R) between the central region (90C, 154C) and the right region (90R, 154R) toward the right region (90R, 154R) and displaces the boundary line (92L, 151L) between the central region (90C, 154C) and the left region (90L, 154L) toward the left region (90L, 154L), if the vehicle speed (V) detected by the vehicle speed sensor (18) is high rather than low.

## Patentansprüche

1. Fahrzeugumgebungsüberwachungsvorrichtung (10, 210) zum Erfassen eines überwachten Ziels (110, 160) in der Umgebung eines Fahrzeugs (12) basierend auf einem aufgenommenen Bildsignal, das von einer an dem Fahrzeug (12) angebrachten Bildaufnahmevorrichtung (16R, 16L) erzeugt wird, wobei sie aufweist:
eine erste Anzeigeeinheit (26), die ein aufgenommenes Bild (72, 134, 262, 270, 272, 272a, 272b) anzeigt, das durch das aufgenommene Bildsignal repräsentiert wird; und
eine zweite Anzeigeeinheit (28), die Information in Bezug darauf visualisiert, ob das überwachte Ziel (110, 160) in einer Mehrzahl von Teilbereichen (90R, 90C, 90L, 154R, 154C, 154L, 274, 276, 278) existiert oder nicht, welche das aufgenommene Bild (72, 134, 262, 270, 272, 272a, 272b) darstellen, das auf der ersten Anzeigeinheit (26) angezeigt wird, basierend darauf, ob Markierungen (86, 136, 157, 290, 292, 294), die jeweils den Teilbereichen (90R, 90C, 90L, 154R, 154C, 154L, 274, 276, 278) zugeordnet sind, angezeigt werden oder nicht;
**gekennzeichnet durch**
einen Aufmerksamkeitsgradevaluierer (44, 250), der einen Aufmerksamkeitsgrad des überwachten Ziels (110, 160) für das Fahrzeug (12) evaluiert, wenn zumindest ein Exemplar des überwachten Ziels (110, 160) in dem aufgenommenen Bild (72, 134, 262, 270, 272, 272a, 272b) erfasst wird,
wobei die zweite Anzeigeeinheit (28) in Abhängigkeit vom Aufmerksamkeitsgrad, der von dem Aufmerksamkeitsgradevaluierer (44, 250) evaluiert wird, die Markierungen (86, 136, 157, 290, 292, 294) in unterschiedlichen Anzeigemodi anzeigt.

2. Die Fahrzeugumgebungsüberwachungsvorrichtung (10) nach Anspruch 1, wobei der Aufmerksamkeitsgrad die Fehlidentifizierungsmöglichkeit repräsentiert, dass ein Fahrer oder Insasse des Fahrzeugs (12) die Position des überwachten Ziels (110, 160) durch visuelle Erkennung der Markierung (86, 136, 157), die angezeigt wird, möglicherweise fehlidentifizieren könnte, und
wenn gewertet wird, dass die Fehlidentifizierungsmöglichkeit hoch ist, dann die zweite Anzeigeeinheit (28) die Markierungen (86, 136, 157), entsprechend einem der Teilbereiche (90R, 90C, 90L, 154R, 154C, 154L), in dem zumindest ein Abschnitt des überwachten Ziels (110, 160) existiert, und einen der benachbarten Teilbereiche (90R, 90C, 90L, 154R, 154C, 154L) gleichzeitig oder abwechselnd anzeigt.

3. Die Fahrzeugumgebungsüberwachungsvorrichtung (10) nach Anspruch 2, wobei der Aufmerksamkeitsgradevaluierer (44) bewertet, dass die Fehlidentifizierungsmöglichkeit hoch ist, wenn das überwachte Ziel (110, 160) auf einer von Grenzlinien (92R, 92L, 151R, 151L) zwischen den Teilbereichen (90R, 90C, 90L, 154R, 154C, 154L) existiert.

4. Die Fahrzeugumgebungsüberwachungsvorrichtung (10) nach Anspruch 2, wobei der Aufmerksamkeitsgradevaluierer (44) bewertet, dass die Fehlidentifizierungsmöglichkeit hoch ist, bevor oder nachdem sich das überwachte Ziel (110, 160) über eine von Grenzlinien (92R, 92L, 151R, 151L) zwischen den Teilbereichen (90R, 90C, 90L, 154R, 154C, 154L) bewegt.

5. Die Fahrzeugumgebungsüberwachungsvorrichtung (10) nach Anspruch 2, wobei der Aufmerksamkeitsgradevaluierer (44) bewertet, dass der Aufmerksamkeitsgrad hoch ist, wenn das überwachte Ziel (110, 160) sehr wahrscheinlich mit dem Fahrzeug (12) kollidiert.

6. Die Fahrzeugumgebungsüberwachungsvorrichtung (210) von Anspruch 1, wobei der Aufmerksamkeitsgrad eine Kollisionsmöglichkeit des überwachten Ziels (110, 160) mit dem Fahrzeug (12) repräsentiert;
der Aufmerksamkeitsgradevaluierer (250) die Kollisionsmöglichkeit jedes überwachten Ziels (110, 160) evaluiert, wenn die überwachten Ziele (110, 160) jeweils in zumindest zweien der Teilbereiche (274, 276, 278) erfasst werden; und
die zweite Anzeigeeinheit (28) die Markierungen (290, 292, 294) in Abhängigkeit von Kollisionsmöglichkeit in unterschiedlichen Anzeigemodi anzeigt.

7. Die Fahrzeugumgebungsüberwachungsvorrichtung (210) nach Anspruch 6, wobei die zweite Anzeigeeinheit (28) eine der Markierungen (292) in Abhängigkeit von zumindest einem überwachten Ziel (110, 160) anzeigt, dessen Kollisionsmöglichkeit als hoch evaluiert wird, so dass sie, in Abhängigkeit von einem anderen der überwachten Ziele (110, 160), visuell deutlicher gemacht wird als eine andere der Markierungen (290, 294).

8. Die Fahrzeugumgebungsüberwachungsvorrichtung (210) nach Anspruch 6, wobei der Aufmerksamkeitsgradevaluierer (250), basierend auf zumindest dem aufgenommenen Bildsignal, bewertet, ob es für den Fahrer des Fahrzeugs (12) leicht ist oder nicht, das überwachte Ziel (110, 160) zu lokalisieren und die Kollisionsmöglichkeit in Abhängigkeit vom Bewertungsergebnis evaluiert.

9. Die Fahrzeugumgebungsüberwachungsvorrichtung (210) nach Anspruch 6, wobei der Aufmerksamkeitsgradevaluierer (250), basierend auf zumindest dem aufgenommenen Bildsignal, bewertet, ob das überwachte Ziel (110, 160) die Existenz des Fahrzeugs (12) erkennt oder nicht und die Kollisionsmöglichkeit in Abhängigkeit vom Bewertungsergebnis evaluiert.

10. Die Fahrzeugumgebungsüberwachungsvorrichtung (210) nach Anspruch 6, wobei der Aufmerksamkeitsgradevaluierer (250) eine Route, der das Fahrzeug (12) folgen soll, vorhersagt, und die Kollisionsmöglichkeit in Abhängigkeit von der vorhergesagten Route evaluiert.

11. Die Fahrzeugumgebungsüberwachungsvorrichtung (210) nach Anspruch 6, wobei der Aufmerksamkeitsgradevaluierer (250) die Fahrtrichtung des überwachten Ziels (110, 160) vorhersagt, und die Kollisionsmöglichkeit in Abhängigkeit von der vorhergesagten Fahrtrichtung evaluiert.

12. Die Fahrzeugumgebungsüberwachungsvorrichtung (10, 210) nach Anspruch 1, wobei die Teilbereiche (90R, 90C, 90L, 154R, 154C, 154L, 274, 276, 278) in einem Bildbereich, der von der Bildaufnahmevorrichtung (16R, 16L) vor dem Fahrzeug aufgenommen wird, einen mittleren Bereich (90C, 154C, 276) entsprechend einem mittleren Bereich, der eine Fahrtrichtung des Fahrzeugs (12) enthält; einen linken Bereich (90L, 154L, 274) entsprechend einem linken Bereich, der links des mittleren Bereichs angeordnet ist, sowie einen rechten Bereich (90R, 154R, 278) entsprechend einem rechten Bereich, der rechts des mittleren Bereichs angeordnet ist, aufweisen.

13. Die Fahrzeugumgebungsüberwachungsvorrichtung (10, 210) nach Anspruch 12, die ferner aufweist:
einen Bereichsselektor (52, 242), der einen der Teilbereiche (90R, 90C, 90L, 154R, 154C, 154L, 274, 276, 278) auswählt, zu dem ein Zielbildbereich (74, 133, 149, H1, H2) gehört, der als Bildbereich des überwachten Ziels (110, 160) von dem aufgenommenen Bild (72, 134, 262, 270, 272, 272a, 272b) gesucht wird,
wobei der Bereichsselektor (52, 242) den mittleren Bereich (90C, 154C, 276) wählt, wenn sich der Zielbildbereich (74, 133, 149, H1, H2) auf einer Grenzlinie (92L, 151 L) zwischen dem mittleren Bereich (90C, 154C, 276) und dem linken Bereich (90L, 154L, 274) befindet, oder sich auf einer Grenzlinie (92R, 151 R) zwischen dem mittleren Bereich (90C, 154C, 276) und dem rechten Bereich (90R, 154R, 278) befindet.

14. Die Fahrzeugumgebungsüberwachungsvorrichtung (10) nach Anspruch 12, die ferner aufweist:
einen Drehrichtungserfassungssensor (20), der eine Drehrichtung des Fahrzeugs (12) erfasst; und
einen Grenzliniensetzer (50), der die Grenzlinie (92R, 151 R) zwischen dem mittleren Bereich (90C, 154C) und dem rechten Bereich (90R, 154R) zu dem rechten Bereich (90R, 154R) hin verlagert, wenn der Drehrichtungserfassungssensor (20) eine Linksdrehung des Fahrzeugs (12) erfasst, und die Grenzlinie (92L, 151 L) zwischen dem mittleren Bereich (90C, 154C) und dem linken Bereich (90L, 154L) zu dem linken Bereich (90L, 154L) hin verlagert, wenn der Drehrichtungserfassungssensor (20) eine Rechtsdrehung des Fahrzeugs (12) erfasst.

15. Die Fahrzeugumgebungsüberwachungsvorrichtung (10, 210) nach Anspruch 12, die ferner aufweist:
einen Fahrzeuggeschwindigkeitssensor (18), der eine Fahrzeuggeschwindigkeit (V) des Fahrzeugs (12) erfasst; und
einen Grenzliniensetzer (50), der die Grenzlinie (92R, 151 R) zwischen dem mittleren Bereich (90C, 154C) und dem rechten Bereich (90R, 154R) zum rechten Bereich (90R, 154R) hin verlagert und die Grenzlinie (92L, 151 L) zwischen dem mittleren Bereich (90C, 154C) und dem linken Bereich (90L, 154L) zu dem linken Bereich (90L, 154L) hin verlagert, wenn die von Fahrzeuggeschwindigkeitssensor (18) erfasste Fahrzeuggeschwindigkeit (V) eher hoch als niedrig ist.

## Revendications

1. Appareil de surveillance de périphérie de véhicule (10, 210) permettant de détecter une cible surveillée (110, 160) dans la périphérie d'un véhicule (12) d'après un signal d'image capturée généré par un dispositif de capture d'image (16R, 16L) monté sur le véhicule (12), comprenant :
une première unité d'affichage (26) qui affiche une image capturée (72, 134, 262, 270, 272, 272a, 272b) représentée par le signal d'image capturée ; et
une seconde unité d'affichage (28) qui visualise des informations indiquant si la cible surveillée (110, 160) existe ou non dans une pluralité de sous-régions (90R, 90C, 90L, 154R, 154C, 154L, 274, 276, 278), qui constituent l'image capturée (72, 134, 262, 270, 272, 272a, 272b) affichée sur la première unité d'affichage (26), selon si des repères (86, 136, 157, 290, 292, 294) associés respectivement aux sous-régions (90R, 90C, 90L, 154R, 154C, 154L, 274, 276, 278) sont affichés ou non ;
**caractérisé par**
un évaluateur de degré d'attention (44, 250) qui évalue un degré d'attention de la cible surveillée (110, 160) pour le véhicule (12), si au moins un cas de la cible surveillée (110, 160) est détecté dans l'image capturée (72, 134, 262, 270, 272, 272a, 272b),
dans lequel la seconde unité d'affichage (28) affiche les repères (86, 136, 157, 290, 292, 294) dans des modes d'affichage différents selon le degré d'attention évalué par l'évaluateur de degré d'attention (44, 250).

2. Appareil de surveillance de périphérie de véhicule (10) selon la revendication 1, dans lequel le degré d'attention représente une possibilité d'identification erronée selon laquelle un conducteur ou un occupant du véhicule (12) peut éventuellement mal identifier la position de la cible surveillée (110, 160) en reconnaissant visuellement le repère (86, 136, 157) qui est affiché ; et
s'il est déterminé que la possibilité d'identification erronée est élevée, alors la seconde unité d'affichage (28) affiche simultanément ou en alternance les repères (86, 136, 157) correspondant à l'une des sous-régions (90R, 90C, 90L, 154R, 154C, 154L) dans laquelle/lesquelles au moins une partie de la cible surveillée (110, 160) existe et une sous-région adjacente des sous-régions (90R, 90C, 90L, 154R, 154C, 154L).

3. Appareil de surveillance de périphérie de véhicule (10) selon la revendication 2, dans lequel l'évaluateur de degré d'attention (44) détermine que la possibilité d'identification erronée est élevée si la cible surveillée (110, 160) existe sur l'une des lignes frontières (92R, 92L, 151R, 151L) entre les sous-régions (90R, 90C, 90L, 154R, 154C, 154L).

4. Appareil de surveillance de périphérie de véhicule (10) selon la revendication 2, dans lequel l'évaluateur de degré d'attention (44) détermine que la possibilité d'identification erronée est élevée avant ou après déplacement de la cible surveillée (110, 160) à travers l'une des lignes frontières (92R, 92L, 151R, 151L) entre les sous-régions (90R, 90C, 90L, 154R, 154C, 154L).

5. Appareil de surveillance de périphérie de véhicule (10) selon la revendication 2, dans lequel l'évaluateur de degré d'attention (44) détermine que le degré d'attention est élevé si la cible surveillée (110, 160) est très susceptible d'entrer en collision avec le véhicule (12).

6. Appareil de surveillance de périphérie de véhicule (210) selon la revendication 1, dans lequel le degré d'attention représente une possibilité de collision de la cible surveillée (110, 160) avec le véhicule (12) ;
l'évaluateur de degré d'attention (250) évalue la possibilité de collision de chaque cible surveillée (110, 160) si les cibles surveillées (110, 160) sont détectées respectivement dans au moins deux des sous-régions (274, 276, 278) ; et
la seconde unité d'affichage (28) affiche les repères (290, 292, 294) dans des modes d'affichage différents selon la possibilité de collision.

7. Appareil de surveillance de périphérie de véhicule (210) selon la revendication 6, dans lequel la seconde unité d'affichage (28) affiche l'un des repères (292) selon au moins une cible surveillée (110, 160) dont la possibilité de collision est évaluée comme étant élevée, de façon à ce qu'il soit davantage souligné qu'un autre des repères (290, 294) selon une autre des cibles surveillées (110, 160).

8. Appareil de surveillance de périphérie de véhicule (210) selon la revendication 6, dans lequel l'évaluateur de degré d'attention (250) détermine s'il est ou non facile pour le conducteur du véhicule (12) de localiser la cible surveillée (110, 160) d'après au moins le signal d'image capturée, et évalue la possibilité de collision selon le résultat de la détermination.

9. Appareil de surveillance de périphérie de véhicule (210) selon la revendication 6, dans lequel l'évaluateur de degré d'attention (250) estime si la cible surveillée (110, 160) reconnaît ou non l'existence du véhicule (12) d'après au moins le signal d'image capturée, et évalue la possibilité de collision selon le résultat de la détermination.

10. Appareil de surveillance de périphérie de véhicule (210) selon la revendication 6, dans lequel l'évaluateur de degré d'attention (250) prédit un itinéraire à suivre par le véhicule (12), et évalue la possibilité de collision selon l'itinéraire prédit.

11. Appareil de surveillance de périphérie de véhicule (210) selon la revendication 6, dans lequel l'évaluateur de degré d'attention (250) prédit une direction de déplacement de la cible surveillée (110, 160), et évalue la possibilité de collision selon la direction de déplacement prédite.

12. Appareil de surveillance de périphérie de véhicule (10, 210) selon la revendication 1, dans lequel les sous-régions (90R, 90C, 90L, 154R, 154C, 154L, 274, 276, 278) comprennent une région centrale (90C, 154C, 276) correspondant à une plage centrale qui comporte une direction de déplacement du véhicule (12), une région gauche (90L, 154L, 274) correspondant à une plage gauche qui est positionnée à gauche de la plage centrale, et une région droite (90R, 154R, 278) correspondant à une plage droite qui est positionnée à droite de la plage centrale, dans une plage d'image capturée à l'avant du véhicule (12) par le dispositif de capture d'image (16R, 16L).

13. Appareil de surveillance de périphérie de véhicule (10, 210) selon la revendication 12, comprenant en outre :
un sélecteur de région (52, 242) qui sélectionne l'une des sous-régions (90R, 90C, 90L, 154R, 154C, 154L, 274, 276, 278) à laquelle appartient une zone d'image cible (74, 133, 149, H1, H2) recherchée en tant que zone d'image de la cible surveillée (110, 160) à partir de l'image capturée (72, 134, 262, 270, 272, 272a, 272b),
dans lequel le sélecteur de région (52, 242) sélectionne la région centrale (90C, 154C, 276) si la zone d'image cible (74, 133, 149, H1, H2) est positionnée sur une ligne frontière (92L, 151L) entre la région centrale (90C, 154C, 276) et la région gauche (90L, 154L, 274), ou est positionnée sur une ligne frontière (92R, 151R) entre la région centrale (90C, 154C, 276) et la région droite (90R, 154R, 278).

14. Appareil de surveillance de périphérie de véhicule (10) selon la revendication 12, comprenant en outre :
un capteur de détection de direction de virage (20) qui détecte une direction de virage du véhicule (12) ; et
un dispositif de réglage de ligne frontière (50) qui déplace la ligne frontière (92R, 151R) entre la région centrale (90C, 154C) et la région droite (90R, 154R) vers la région droite (90R, 154R) si le capteur de détection de direction de virage (20) détecte un virage à gauche du véhicule (12), et déplace la ligne frontière (92L, 151L) entre la région centrale (90C, 154C) et la région gauche (90L, 154L) vers la région gauche (90L, 154L) si le capteur de détection de direction de virage (20) détecte un virage à droite du véhicule (12).

15. Appareil de surveillance de périphérie de véhicule (10, 210) selon la revendication 12, comprenant en outre :
un capteur de vitesse de véhicule (18) qui détecte une vitesse de véhicule (V) du véhicule (12) ; et
un dispositif de réglage de ligne frontière (50) qui déplace la ligne frontière (92R, 151R) entre la région centrale (90C, 154C) et la région droite (90R, 154R) vers la région droite (90R, 154R) et déplace la ligne frontière (92L, 151L) entre la région centrale (90C, 154C) et la région gauche
(90L, 154L) vers la région gauche (90L, 154L), si la vitesse de véhicule (V) détectée par le capteur de vitesse de véhicule (18) est élevée plutôt que faible.
